# EUROPEAN PATENT APPLICATION

(11) **EP 4 365 722 A1**
(43) Date of publication of application: **08.05.2024**
(21) Application number: 22863125.5
(22) Date of filing: 16.08.2022
(51) Int. Cl.: G06F 3/0481, G06F 3/0484, G06F 9/451

(54) **METHOD FOR DISPLAYING DOCK BAR IN LAUNCHER AND ELECTRONIC DEVICE**

(30) Priority: 30.08.2021 CN 202111007642
(71) Applicant: Huawei Technologies Co., Ltd., Longgang Shenzhen, Guangdong 518129 (CN)
(72) Inventor: WO, Facai, Shenzhen, Guangdong 518129 (CN)
(74) Representative: Gill Jennings & Every LLP
(86) International application number: PCT/CN2022/112854
(87) International publication number: WO 2023/029985

(57) **Abstract**

This application provides a method for displaying a dock bar in a launcher and an electronic device, and relates to the field of terminal technologies, so that more abundant application functions can be displayed in the dock bar of the launcher, and a user can quickly use a required application function by using the dock bar. The method includes: An electronic device displays a first dock bar in a launcher, where the first dock bar includes a first card of a first application service, and the first card includes service content of the first application service; and in response to an operation of selecting the first card in the first dock bar by a user, the electronic device enables the first application service, and displays a display interface corresponding to the first application service.

## Description

This application claims priority to Chinese Patent Application No. 202111007642.0, filed with the China National Intellectual Property Administration on August 30, 2021 and entitled "METHOD FOR DISPLAYING DOCK BAR IN LAUNCHER AND ELECTRONIC DEVICE", which is incorporated herein by reference in its entirety.

### TECHNICAL FIELD

This application relates to the field of terminal technologies, and in particular, to a method for displaying a dock bar in a launcher and an electronic device.

### BACKGROUND

Usually, one or more applications are installed in an electronic device, for example, a mobile phone, and a user operates these applications to implement various application functions. A mobile phone is used as an example. The mobile phone may display an application icon of each application in a launcher (launcher), and a user may use the application icon as an entry for entering the application to start the related application.

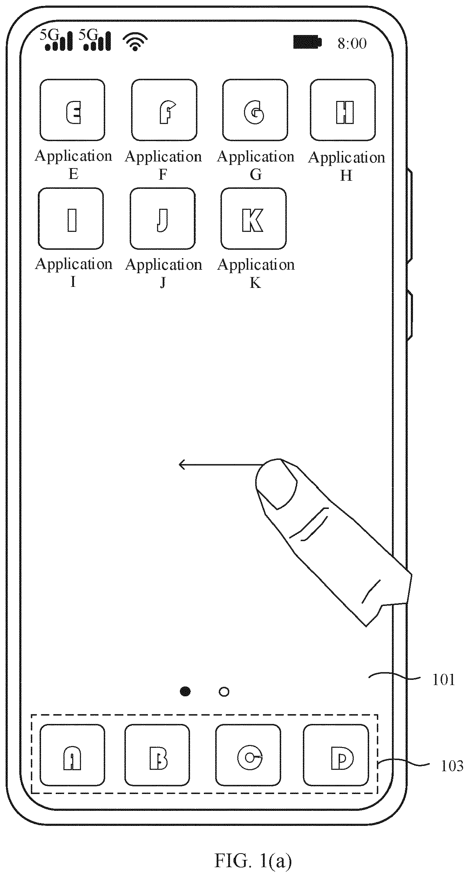

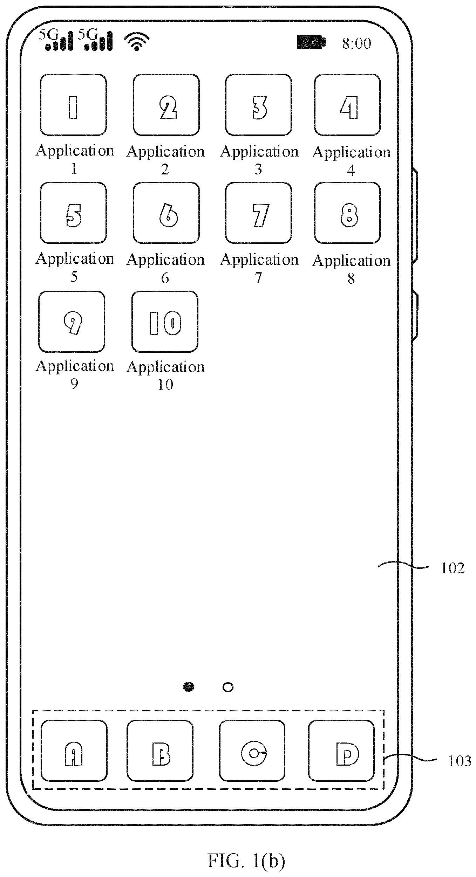

As more applications are installed in the electronic device, a page quantity of the launcher also increases. To help the user search for an application icon in the launcher, dock bars (namely, dock bars) are set in launchers of some electronic devices. Application icons of one or more applications may be set in the dock bar, and content displayed in the dock bar in different pages of the launcher is generally fixed. For example, as shown in FIG. 1(a), when displaying a first page 101 of a launcher, a mobile phone may display a dock bar 103 in the first page 101, where the dock bar 103 includes application icons of an application A to an application D. As shown in FIG. 1(b), when the mobile phone switches to a second page 102 of the launcher, the mobile phone may continue to display the dock bar 103 in the second page 102, and the application icons of the application A to the application D are still displayed in the dock bar 103.

However, as more applications are installed in the electronic device, one or more application icons fixedly displayed in the dock bar may not be currently required by the user. Therefore, a function provided by the existing dock bar cannot meet a use requirement of the user.

### SUMMARY

This application provides a method for displaying a dock bar in a launcher and an electronic device, so that more abundant application functions can be displayed in the dock bar of the launcher, and a user can quickly use a required application function by using the dock bar.

To achieve the foregoing objective, this application uses the following technical solutions.

According to a first aspect, this application provides a method for displaying a dock bar in a launcher, and the method includes: An electronic device displays a first dock bar in a launcher, where the first dock bar includes a first card of a first application service, and the first card includes service content of the first application service; and subsequently, in response to an operation of selecting the first card in the first dock bar by a user, the electronic device enables the first application service, and displays a display interface corresponding to the first application service.

In other words, the electronic device may display a card of an application service in the dock bar of the launcher. In this way, when displaying any page in the launcher, a tablet computer may display the dock bar in the launcher, so that the user can directly start a related application service in the dock bar, a process of searching for a card in each sub-screen of the launcher is saved, and the dock bar can provide more abundant application functions for the user.

In a possible implementation, the first dock bar further includes an application icon of a second application. In other words, in addition to a card of an application service, the first dock bar can further display an application icon of an application.

In a possible implementation, the first dock bar includes N cards that are in a one-to-one correspondence with N (N is an integer greater than 0) application services, and the N application services include the first application service. In this case, the first dock bar may be referred to as a card dock bar. Usually, the card dock bar does not block another display element in the launcher.

In a possible implementation, after the electronic device displays the first dock bar in the launcher, the method further includes: The electronic device receives a switching operation entered by the user on the first dock bar; and in response to the switching operation, the electronic device switches the N cards in the first dock bar to M (M is an integer greater than 0) application icons. In this case, the first dock bar may be referred to as an application dock bar. Usually, the card dock bar also does not block another display element in the launcher.

In a possible implementation, after the electronic device displays the first dock bar in the launcher, the method further includes: The electronic device receives an expanding operation entered by the user on the first dock bar; and in response to the expanding operation, the electronic device switches the first dock bar to a second dock bar (which may be referred to as an expanded dock bar), where the second dock bar is an expanded form of the first dock bar, and the second dock bar may block another display element in the launcher. For example, the second dock bar includes a second card of the first application service, and content of the second card and content of the first card have an intersection. A card of an application service in the expanded dock bar is more abundant than a card of the application service in the card dock bar.

For example, the first card may be a card of a sub-service in the first application service. In this case, the second card may be an expanded card including a plurality of sub-services in the first application service; or the content of the first card is a subset of the content of the second card, that is, information in the second card is greater than information in the first card.

In a possible implementation, the second dock bar further includes N-1 expanded cards that are in a one-to-one correspondence with N-1 application services that exclude the first application service and that are in the N application services.

In a possible implementation, the second dock bar further includes M application icons. In other words, in addition to expanded cards of the application services in the card dock bar, the expanded dock bar further includes application icons of the applications in the application dock bar.

In a possible implementation, after the electronic device displays the first dock bar in the launcher, the method further includes: The electronic device receives a preset operation entered by the user on the first card in the first dock bar; and in response to the preset operation, the electronic device displays a preset first setting interface, where the first setting interface is used to prompt the user to select a card that represents the first application service, for display in the first dock bar.

In a possible implementation, after the electronic device switches the first dock bar to the second dock bar, the method further includes: The electronic device receives a preset operation entered by the user on the second card in the second dock bar; and in response to the preset operation, the electronic device displays a preset first setting interface, where the first setting interface is used to prompt the user to select a card that represents the first application service, for display in the first dock bar.

In other words, there may be a plurality of cards corresponding to the first application service (for example, a plurality of cards with different sizes, layout manners, or display content). The user may manually select a specific card that represents the first application service, for display in the first dock bar.

In a possible implementation, the first setting interface may include cards of the sub-services in the first application service, and after the electronic device displays the preset first setting interface, the method further includes: In response to an operation of selecting a third card in the first setting interface by the user, the electronic device displays the third card in the first dock bar, and no longer displays the first card in the first dock bar. In other words, the electronic device may display, in the first dock bar, a card manually selected by the user as a representative of the first application service.

In a possible implementation, the first setting interface includes cards of the sub-services in the first application service, and after the electronic device displays the preset first setting interface, the method further includes: In response to an operation of selecting a third card and the first card in the first setting interface by the user, the electronic device selects one of the third card and the first card for display in the first dock bar. In other words, the electronic device may select, according to a specific policy, one of a plurality of cards manually selected by the user as a representative of the first application service, for display in the first dock bar.

In another possible implementation, the user may further manually select a specific card that represents the first application service, for display in the second dock bar. For example, after the electronic device switches the first dock bar to the second dock bar, if the electronic device receives a preset operation entered by the user on the second card in the second dock bar, the electronic device may display a corresponding setting interface in response to the preset operation, where the setting interface is used to prompt the user to select a card that represents the first application service, for display in the second dock bar. For example, the user may select a specific size, display content, a layout manner, and the like of the card for display in the second dock bar.

In a possible implementation, a fourth card of a second application service is displayed in an area other than the first dock bar in the launcher; and after the electronic device displays the first dock bar in the launcher, the method further includes: The electronic device receives a dragging operation of moving the fourth card to the first dock bar by the user; in response to the dragging operation, the electronic device adds a first placeholder box to the first dock bar; and after detecting that the fourth card is released by the user, the electronic device adds a card of the second application service to the first placeholder box, where the card of the second application service may be the same as or different from the fourth card. For example, sizes, display content, layout manners, and the like of the two cards may be different. The fourth card may be from the launcher, or may be from any position such as a drop-down menu, a pull-up menu, a dialog box, or a floating window. In this case, the user may drag the fourth card to the first dock bar for adding.

In a possible implementation, a fourth card of a second application service is displayed in an area other than the first dock bar in the launcher; and after the electronic device displays the first dock bar in the launcher, the method further includes: The electronic device receives a dragging operation of moving the fourth card to the first dock bar by the user; in response to the dragging operation, the electronic device may switch the first dock bar to the second dock bar, and add a second placeholder box to the second dock bar; and after detecting that the fourth card is released by the user, the electronic device adds a card of the second application service to the second placeholder box, where the card of the second application service is the same as or different from the fourth card. Similarly, for example, sizes, display content, layout manners, and the like of the two cards may be different. In this case, the user may drag the fourth card to the second dock bar for adding.

For example, in a process in which the fourth card is dragged by the user, the electronic device may display a corresponding animation effect, for example, the card becomes larger, becomes smaller, or is replaced with another icon.

In a possible implementation, after the electronic device adds the card of the second application service to the first placeholder box, or after the electronic device adds the card of the second application service to the second placeholder box, the method further includes: The electronic device displays a preset second setting interface, where the second setting interface is used to prompt the user to select a card that represents the second application service, for display in the first dock bar. In other words, after the user may drag the fourth card to the first dock bar or the second dock bar for adding, the user may further set a specific card that represents the first application service, for display in the first dock bar or the second dock bar.

In a possible implementation, after the electronic device displays the first dock bar in the launcher, the method further includes: The electronic device receives a dragging operation of moving the first card in the first dock bar to the launcher by the user; and in response to the dragging operation, the electronic device adds a card of the first application service to the launcher, where the card of the first application service is the same as or different from the first card.

In a possible implementation, after the electronic device switches the first dock bar to the second dock bar, the method further includes: The electronic device receives a dragging operation of moving the second card in the second dock bar to the launcher by the user; and in response to the dragging operation, the electronic device adds a card of the first application service to the launcher, where the card of the first application service is the same as or different from the second card.

In other words, the user may further drag a card in the first dock bar or the second dock bar to another location of the launcher, that is, add the card in the dock bar to a sub-screen of the launcher. Certainly, the user may further perform a management operation, for example, deleting a card in the first dock bar or the second dock bar.

In a possible implementation, after the electronic device displays the first dock bar in the launcher, the method further includes: The electronic device displays a recommended card in the first dock bar, where an add button is set on the recommended card; and subsequently, if it is detected that the user selects the add button, the electronic device may add the recommended card to the first dock bar. In other words, in addition to manually adding a card to the first dock bar by the user, the electronic device may further automatically recommend a related card in the first dock bar, so that the user can conveniently add the recommended card to the first dock bar.

In a possible implementation, after the electronic device displays the recommended card in the first dock bar, the method further includes: In response to an expanding operation entered by the user on the first dock bar, the electronic device switches the first dock bar to the second dock bar, where the second dock bar includes an expanded card of the recommended card, and an add button is also set on the expanded card; and similarly, if it is detected that the user selects the add button, the electronic device may add the recommended card to the first dock bar, and add the expanded card to the second dock bar. In other words, after the electronic device automatically recommends the related recommended card in the first dock bar, the expanded card of the recommended card may further be displayed in an expanded dock bar (that is, the second dock bar). The user may add the expanded card of the recommended card to the second dock bar, and add the recommended card to the first dock bar.

In a possible implementation, before the electronic device displays the first dock bar in the launcher, the method further includes: When displaying the first dock bar for the first time, the electronic device displays K (K is an integer greater than 1) recommended cards in the first dock bar, where an add button is set on each of the K recommended cards; and if it is detected that the user selects an add button of a first recommended card, the electronic device may add the first recommended card to the first dock bar, where the first recommended card is one of the K recommended cards. In other words, the electronic device may recommend a group of recommended cards to the user when the user uses the first dock bar for the first time, so that the user can conveniently add a required recommended card to the first dock bar.

In a possible implementation, after the electronic device displays the K recommended cards in the first dock bar, the method further includes: In response to an expanding operation entered by the user on the first dock bar, the electronic device switches the first dock bar to the second dock bar, where the second dock bar includes K expanded cards that are in a one-to-one correspondence with the K recommended cards, and an add button is set on each of the expanded cards; and if it is detected that the user selects an add button of a first expanded card, the electronic device adds the first recommended card corresponding to the first expanded card to the first dock bar, and adds the first expanded card to the second dock bar. In other words, after the electronic device automatically recommends a group of recommended cards in the first dock bar, expanded cards of the recommended cards may further be displayed in an expanded dock bar (that is, the second dock bar). The user may add the expanded card of the recommended card to the second dock bar, and add the recommended card to the first dock bar.

Certainly, if the user does not need to add a corresponding recommended card to the first dock bar or the second dock bar, the user may enter a deletion operation on the recommended card, to trigger the electronic device to delete the corresponding recommended card. Alternatively, the electronic device may automatically delete the corresponding recommended card after a preset time period.

For example, a size of the first card in the first dock bar may be 1×2, and a size of an application icon in the first dock bar may be 1×1. In this case, in the second dock bar obtained after the first dock bar is expanded, a size of the second card is greater than the size of the first card. For example, the size of the second card may be 2×4, 4×4, 4×8, or the like.

According to a second aspect, this application provides an electronic device, including: a touchscreen, one or more processors, one or more memories, and one or more computer programs. The processor is coupled to both the touchscreen and the memory, the one or more computer programs are stored in the memory, and when the electronic device runs, the processor executes the one or more computer programs stored in the memory, so that the electronic device performs the method for displaying a dock bar in a launcher according to any one of the foregoing aspects.

According to a third aspect, this application provides a computer-readable storage medium, including computer instructions. When the computer instructions are run on an electronic device, the electronic device is enabled to perform the method for displaying a dock bar in a launcher according to any one of the foregoing aspects.

According to a fourth aspect, this application provides a computer program product. When the computer program product runs on an electronic device, the electronic device is enabled to perform the method for displaying a dock bar in a launcher according to any one of the foregoing aspects.

It may be understood that, the electronic device in the second aspect, the computer-readable storage medium in the third aspect, and the computer program product in the fourth aspect that are provided above are all configured to perform the corresponding method provided above. Therefore, for beneficial effects that can be achieved by the electronic device, the computer-readable storage medium, and the computer program product, refer to beneficial effects in the corresponding method provided above. Details are not described again herein.

### BRIEF DESCRIPTION OF DRAWINGS

FIG. 1(a) and FIG. 1(b) are a first schematic diagram of an application scenario of a launcher in the conventional technology;
FIG. 2 is a second schematic diagram of an application scenario of a launcher in the conventional technology;
FIG. 3 is a first schematic diagram of a structure of an electronic device according to an embodiment of this application;
FIG. 4 is a schematic diagram of an architecture of an operating system of an electronic device according to an embodiment of this application;
FIG. 5(a) and FIG. 5(b) are a first schematic diagram of an application scenario of a method for displaying a dock bar in a launcher according to an embodiment of this application;
FIG. 6 is a second schematic diagram of an application scenario of a method for displaying a dock bar in a launcher according to an embodiment of this application;
FIG. 7 is a third schematic diagram of an application scenario of a method for displaying a dock bar in a launcher according to an embodiment of this application;
FIG. 8(a) and FIG. 8(b) are a fourth schematic diagram of an application scenario of a method for displaying a dock bar in a launcher according to an embodiment of this application;
FIG. 9(a) and FIG. 9(b) are a fifth schematic diagram of an application scenario of a method for displaying a dock bar in a launcher according to an embodiment of this application;
FIG. 10(a) and FIG. 10(b) are a sixth schematic diagram of an application scenario of a method for displaying a dock bar in a launcher according to an embodiment of this application;
FIG. 11(a) and FIG. 11(b) are a seventh schematic diagram of an application scenario of a method for displaying a dock bar in a launcher according to an embodiment of this application;
FIG. 12 is an eighth schematic diagram of an application scenario of a method for displaying a dock bar in a launcher according to an embodiment of this application;
FIG. 13(a) and FIG. 13(b) are a ninth schematic diagram of an application scenario of a method for displaying a dock bar in a launcher according to an embodiment of this application;
FIG. 14A and FIG. 14B are a tenth schematic diagram of an application scenario of a method for displaying a dock bar in a launcher according to an embodiment of this application;
FIG. 15A and FIG. 15B are an eleventh schematic diagram of an application scenario of a method for displaying a dock bar in a launcher according to an embodiment of this application;
FIG. 16(a) to FIG. 16(c) are a twelfth schematic diagram of an application scenario of a method for displaying a dock bar in a launcher according to an embodiment of this application;
FIG. 17 is a thirteenth schematic diagram of an application scenario of a method for displaying a dock bar in a launcher according to an embodiment of this application;
FIG. 18(a) and FIG. 18(b) are a fourteenth schematic diagram of an application scenario of a method for displaying a dock bar in a launcher according to an embodiment of this application;
FIG. 19(a) and FIG. 19(b) are a fifteenth schematic diagram of an application scenario of a method for displaying a dock bar in a launcher according to an embodiment of this application;
FIG. 20(a) and FIG. 20(b) are a sixteenth schematic diagram of an application scenario of a method for displaying a dock bar in a launcher according to an embodiment of this application;
FIG. 21 is a seventeenth schematic diagram of an application scenario of a method for displaying a dock bar in a launcher according to an embodiment of this application;
FIG. 22 is an eighteenth schematic diagram of an application scenario of a method for displaying a dock bar in a launcher according to an embodiment of this application;
FIG. 23 is a nineteenth schematic diagram of an application scenario of a method for displaying a dock bar in a launcher according to an embodiment of this application;
FIG. 24(a) and FIG. 24(b) are a twentieth schematic diagram of an application scenario of a method for displaying a dock bar in a launcher according to an embodiment of this application; and
FIG. 25 is a second schematic diagram of a structure of an electronic device according to an embodiment of this application.

### DESCRIPTION OF EMBODIMENTS

The following describes implementations of embodiments in detail with reference to the accompanying drawings.

A method for displaying a dock bar in a launcher provided in embodiments of this application may be applied to an electronic device such as a mobile phone, a tablet computer, a television (also referred to as a smart screen, a large-screen device, or the like), a notebook computer, an ultra-mobile personal computer (Ultra-mobile Personal Computer, UMPC), a handheld computer, a netbook, a personal digital assistant (Personal Digital Assistant, PDA), a wearable device, an in-vehicle device (also referred to as a head unit), a virtual reality device, and the like. This is not limited in embodiments of this application.

For example, the tablet computer is the foregoing electronic device, and various applications installed in the tablet computer may provide corresponding application services for a user. The application service refers to a service that is provided by an application for a user to implement one or more specific functions.

For example, a chat APP can provide a chat service, a message leaving service, a friend circle service, and the like. A video APP can provide a playback service, a sharing service, a favorites service, and the like for various video files. A calendar APP can provide a calendar service and the like.

In some embodiments, an application service may include a plurality of sub-services, and each sub-service may provide corresponding service content for a user. In this case, the plurality of sub-services form the application service. For example, a smart home APP can provide a smart life service. The smart life service further includes four sub-services: a morning broadcast service, a warm home service, an express reminder service, and a smart travel service. The user can use any of the four sub-services independently to implement functions of the smart home APP.

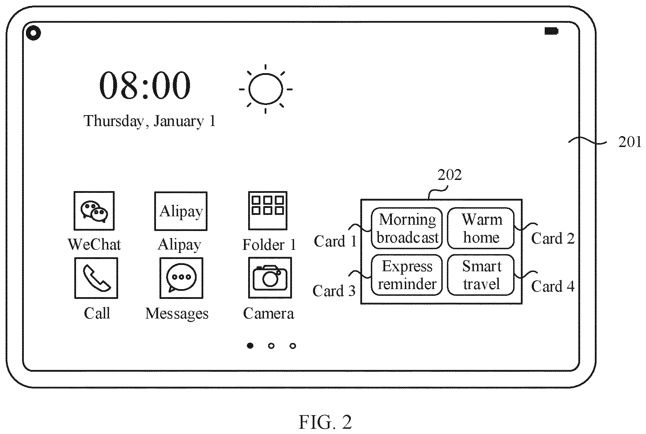

Currently, the foregoing application service may be displayed in an electronic device such as a tablet computer in a form of a card. For example, as shown in FIG. 2, the tablet computer may display, in a launcher 201, a first card 202 of the smart home APP, and the first card 202 corresponds to the smart life service provided by the smart home APP. When the smart life service further includes the morning broadcast service, the warm home service, the express reminder service, and the smart travel service, the first card 202 may include a card 1 corresponding to the morning broadcast service, a card 2 corresponding to the warm home service, a card 3 corresponding to the express reminder service, and a card 4 corresponding to the smart travel service.

The user may interact with the first card 202 to use each sub-service in the smart life service provided by the smart home APP. For example, if it is detected that the user taps the card 3 in the first card 202, the tablet computer may start the smart home APP and display a display interface related to the express reminder service. In this way, the user may directly access a specific application service in the smart home APP by using the first card 202 of the launcher 201 as an entry.

When a card (for example, the first card 202) is displayed in a launcher (for example, the launcher 201), a size of the card is generally greater than a size of an application icon. For example, the size of the application icon is usually 1×1, and the size of the card may be 1×2, 2×2, 2×4, or a larger size.

In this case, when a quantity of application icons and cards in the launcher increases, the tablet computer needs to divide the launcher into a plurality of pages, and display corresponding application icons and cards in different pages. Consequently, when searching for a card or an application icon in the launcher, the user needs to flip pages in the launcher for a plurality of times to find the card or the application icon. Consequently, use efficiency of the card in the launcher is reduced, and user experience is also reduced.

In view of this, according to the method for displaying a dock bar in a launcher provided in embodiments of this application, more abundant application functions can be displayed in the dock bar of the launcher, so that the user can quickly use a required application icon or card by using the dock bar. The foregoing display method is described in detail in a subsequent embodiment, and therefore is not described herein again.

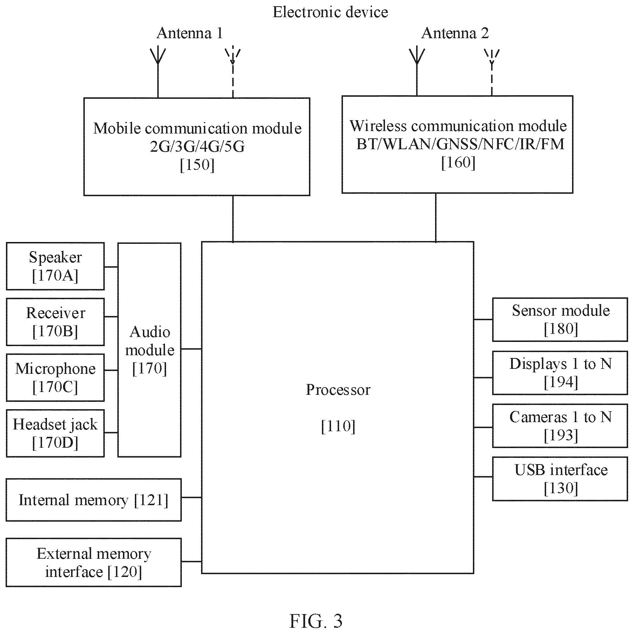

For example, the display method may be performed by an electronic device. FIG. 3 is a schematic diagram of a structure of an electronic device.

The electronic device may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It may be understood that the structure illustrated in this embodiment of the present invention does not constitute a specific limitation on the electronic device. In other embodiments of this application, the electronic device may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device may include one or N displays 194, where N is a positive integer greater than 1.

The electronic device may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) optoelectronic transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transformation on frequency energy.

The video codec is configured to compress or decompress a digital video. The electronic device may support one or more video codecs. In this way, the electronic device may play or record videos in a plurality of coding formats, for example, moving picture experts group (moving picture experts group, MPEG)-1, MPEG-2, MPEG-3, and MPEG-4.

The external memory interface 120 may be configured to connect to an external storage card, for example, a micro SD card, to extend a storage capability of the electronic device. The external storage card communicates with the processor 110 through the external memory interface 120, to implement a data storage function. For example, a music file or a video file is stored in the external storage card.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, an application required by at least one function (for example, a sound playing function or an image playing function), and the like. The data storage area may store data (such as audio data and a phone book) created when the electronic device is used, and the like. In addition, the internal memory 121 may include a highspeed random access memory, or may include a non-volatile memory, for example, at least one magnetic disk storage component, a flash memory, a universal flash storage (universal flash storage, UFS), or the like.

The electronic device may implement an audio function by using the audio module 170, the speaker 170A, the receiver 170B, the microphone 170C, the headset jack 170D, the application processor, and the like, for example, music playback, recording, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may be used to listen to music or answer a hands-free call by using the speaker 170A.

The receiver 170B, also referred to as an "earpiece", is configured to convert an audio electrical signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to implement a noise reduction function in addition to capturing a sound signal. In some other embodiments, three, four, or more microphones 170C may alternatively be disposed in the electronic device, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a touch sensor, a fingerprint component, a pressure sensor, a gyroscope sensor, a barometric pressure sensor, a magnetic sensor, an acceleration sensor, a range sensor, an optical proximity sensor, a fingerprint sensor, a temperature sensor, an ambient light sensor, a bone conduction sensor, and the like

A touch sensor is used as an example. The touch sensor may collect a touch event (for example, an operation performed by the user on a surface of the touch sensor by using any suitable object such as a finger or a stylus) of the user on or near the touch sensor, and send collected touch information to another component, for example, the processor 110. For example, the touch sensor may be implemented in a plurality of manners such as a resistive type, a capacitive type, an infrared type, and a surface acoustic wave type. The touch sensor and the display 194 may be integrated into a touchscreen of the electronic device, or the touch sensor and the display 194 may be used as two independent components to implement input and output functions of the electronic device.

Certainly, the electronic device may further include a charging management module, a power management module, a battery, a button, an indicator, one or more SIM card interfaces, and the like. This is not limited in embodiments of this application.

A layered architecture, an event-driven architecture, a micro-core architecture, a micro-service architecture, or a cloud architecture may be used for a software system of the electronic device. In embodiments of this application, the software structure of the electronic device is described by using an Android system with a layered architecture as an example.

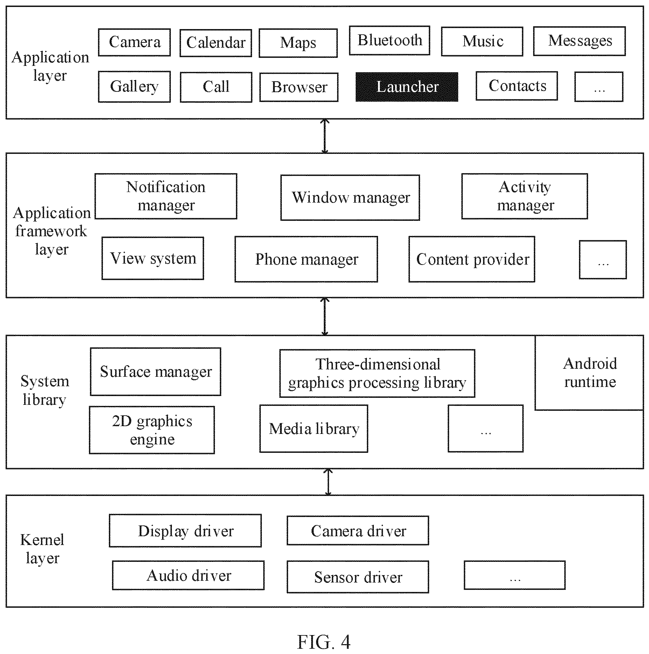

FIG. 4 is a block diagram of the software structure of the electronic device according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

### 1. Application layer

The application layer may include a series of applications.

As shown in FIG. 4, the applications may include applications (applications, APPs) such as Call, Contacts, Camera, Gallery, Calendar, Maps, Navigation, Bluetooth, Music, Video, and Messages.

Still as shown in FIG. 4, the application layer further includes an Android core application, for example, a launcher (an initiator, which may also be referred to as a desktop or a home screen). Usually, after the Android system is started, the launcher can run in the Android system as a core application.

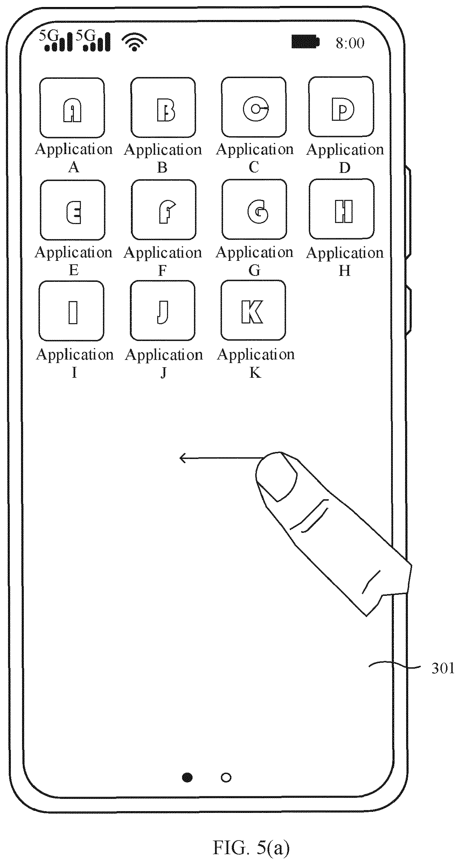

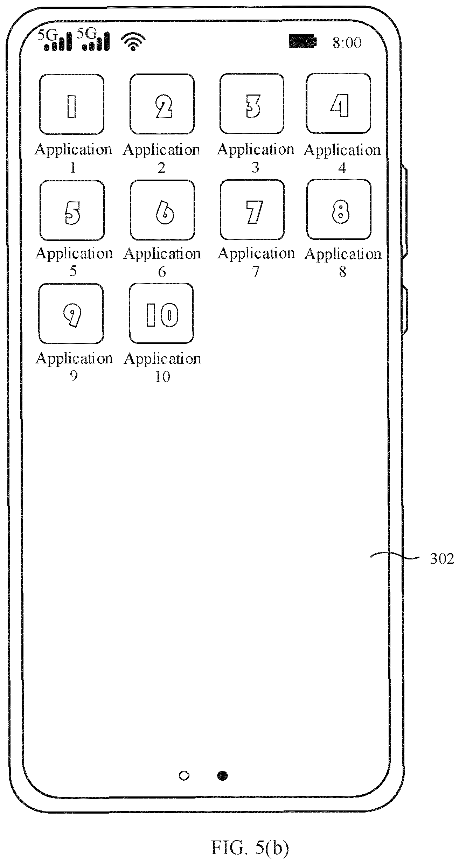

The launcher can be used to display and manage other APPs installed at the application layer. For example, the launcher may divide the home screen of the electronic device into a plurality of sub-screens (sub-screens), and display an application icon of an application on each sub-screen. For example, as shown in FIG. 5(a), after the launcher is started, a first sub-screen 301 may be displayed, and the first sub-screen 301 may include application icons of one or more applications. Subsequently, if it is detected that the user enters an operation of switching a sub-screen (for example, an operation of sliding leftwards/rightwards), as shown in FIG. 5(b), the launcher may display a second sub-screen 302. Similar to the first sub-screen 301, the second sub-screen 302 may also include application icons of one or more applications. After the launcher detects that the user taps an application icon of an application in a sub-screen, the launcher may start an application process of the application by invoking a related service at the application framework layer, and finally an interface of the application is displayed in the screen.

It should be noted that, in addition to displaying an application icon of an application in the sub-screen, the launcher may further display an icon of a folder in the sub-screen. One folder may include application icons of a plurality of applications. Alternatively, the launcher may display a visual interface element, for example, a dialog box, a status bar, a navigation bar, and a card (which may also be referred to as a Widget or a widget) in the sub-screen. For example, the launcher may display, in the first sub-screen 301 or the second sub-screen 302 in a form of a card, one or more application services provided by different applications.

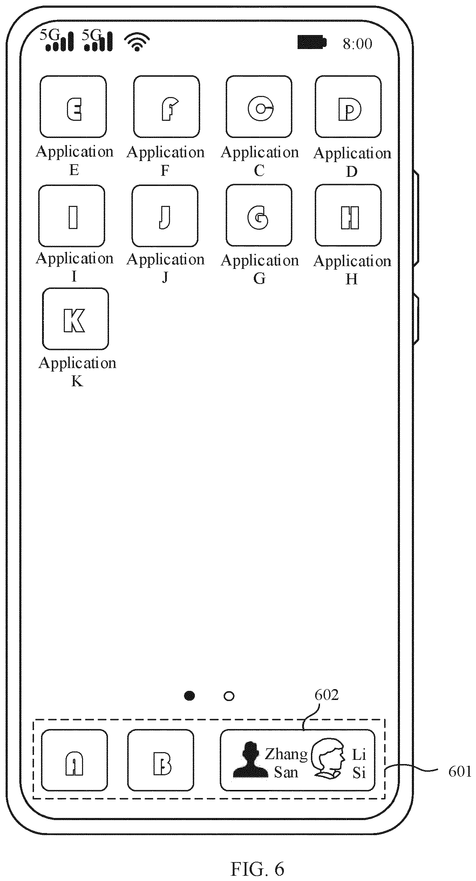

In this embodiment of this application, the launcher may further display a dock bar (namely, a dock bar) in each sub-screen of the launcher. For example, as shown in FIG. 6, a dock bar 601 may be fixedly displayed at the bottom of the launcher. In other words, regardless of which sub-screen of the launcher is displayed by the launcher, the dock bar 601 may be displayed at the bottom of the corresponding sub-screen. The dock bar 601 may include application icons of one or more applications, and also include cards of one or more application services. For example, still as shown in FIG. 6, the launcher may display application icons of an application A and an application B in the dock bar 601, and the launcher may display, in the dock bar 601, a card 602 of an application service 1 (for example, a contact service) provided by an application C.

In this way, regardless of which sub-screen of the launcher is displayed by the launcher, the user may find the card 602 in the dock bar 601, and enable a related application service by using the card 602 as an entry. The user does not need to search for a related card in a plurality of sub-screens (namely, a plurality of pages) of the launcher by performing a page flipping operation, thereby simplifying a card search process in the launcher, and improving card use efficiency in the launcher and user experience.

In addition, the foregoing embodiment is described by using an example in which the launcher includes two sub-screens. It may be understood that the launcher may further display more or fewer sub-screens. In some embodiments, the user may manually set a quantity of sub-screens in a setting function of the launcher. This is not limited in this embodiment of this application.

### 2. Application framework layer

The application framework layer provides an application programming interface (application programming interface, API) and a programming framework for an application at the application layer. The application framework layer includes some predefined functions.

For example, the application framework layer may include a notification manager, an activity manager, a window manager, a content provider, a view system, a phone manager, and the like.

The view (view) system may be configured to construct a display interface of an application. Each display interface may include one or more controls. Generally, the controls may include interface elements such as an icon, a button, a menu, a tab, a text box, a dialog box, a status bar, a navigation bar, and a widget (Widget).

The notification manager may enable the application to display notification information in the status bar, and may be used to transfer a message of a notification type that may automatically disappear after a short stay without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears in the screen in a form of a dialog window. For example, text information is displayed in the status bar, an announcement is given, the electronic device vibrates, or an indicator light blinks.

The activity manager may be configured to manage a lifecycle of each application. The application usually runs in the operating system in a form of an activity. The activity manager may schedule an activity process of the application to manage the lifecycle of each application. The window manager is configured to manage a window program.

The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, an address book, and the like.

The phone manager is configured to provide a communication function of the mobile phone, for example, management of a call status (including answering, declining, or the like). The resource manager provides various resources for the application, such as a localized character string, an icon, a picture, a layout file, and a video file.

### 3. Android runtime and system library

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), a 2D graphics engine (for example, SGL), and the like.

The surface manager is configured to manage a display sub-system, and provide fusion of 2D and 3D layers for a plurality of applications. The media library supports playback and recording in a plurality of commonly used audio and video formats, and static image files. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, a sensor driver, and the like. This is not limited in this embodiment of this application.

The following describes in detail, with reference to the accompanying drawings, a method for displaying a dock bar in a launcher provided in an embodiment of this application by using a tablet computer as the foregoing electronic device.

For example, after the tablet computer starts to run the launcher (that is, the launcher), the launcher may be divided into one or more sub-screens (sub-screens). Each sub-screen may display a control such as an application icon, a folder icon, or a card. A user can use these controls as entries to applications or pages. For example, the user may trigger the tablet computer to start and enter a corresponding application by tapping an application icon in the launcher. For another example, the user may trigger the tablet computer to enter a page in a corresponding folder by tapping a folder icon in the launcher. For another example, the user may trigger the tablet computer to display a page of a related application service by tapping a card in the launcher.

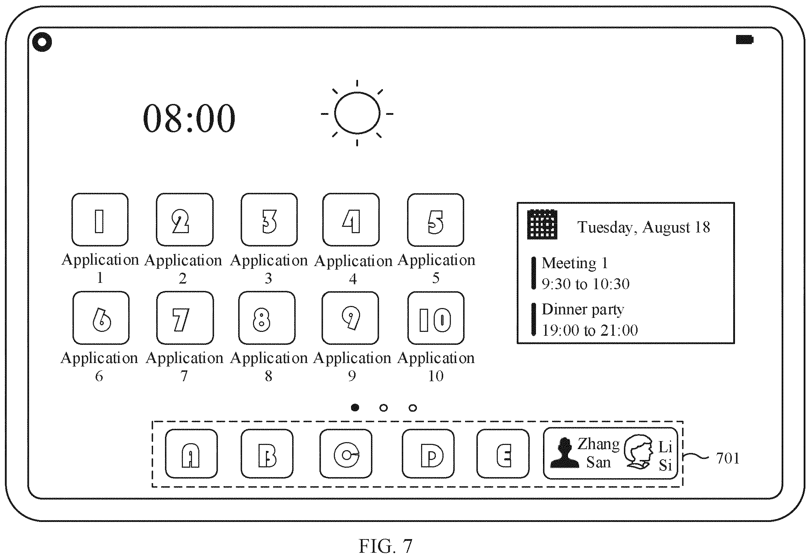

In some embodiments, as shown in FIG. 7, the tablet computer may further display a dock bar 701 in the launcher, and the dock bar 701 may include application icons of one or more applications. For example, the dock bar 701 may be fixedly displayed at the bottom of the launcher, that is, when displaying any sub-screen of the launcher, the tablet computer can display the dock bar 701 in a corresponding sub-screen. Usually, content displayed in the dock bar 701 does not change with the sub-screen. For example, when the tablet computer displays a first sub-screen of the launcher, the dock bar 701 may be displayed in the first sub-screen. Subsequently, when the tablet computer displays a second sub-screen of the launcher, the dock bar 701 may continue to be displayed in the second sub-screen. Content displayed in the dock bar 701 in the first sub-screen is the same as content displayed in the dock bar 701 in the second sub-screen.

In some other embodiments, the tablet computer may alternatively hide the dock bar 701 in the launcher. After detecting a preset invoking gesture (for example, a gesture of sliding up from the bottom of the launcher) entered by the user, the tablet computer may display the dock bar 701 in the launcher. Correspondingly, after detecting a preset hiding gesture entered by the user, the tablet computer may hide the dock bar 701 in the launcher and not display the dock bar 701.

In this embodiment of this application, in addition to displaying the application icon of the application in the dock bar 701, the tablet computer may further display cards of one or more application services in the dock bar 701. In this way, when displaying any page in the launcher, the tablet computer may display the dock bar 701 in the launcher, so that the user can directly enable a related application service in the dock bar 701, and a process of searching for a card in each sub-screen of the launcher is saved.

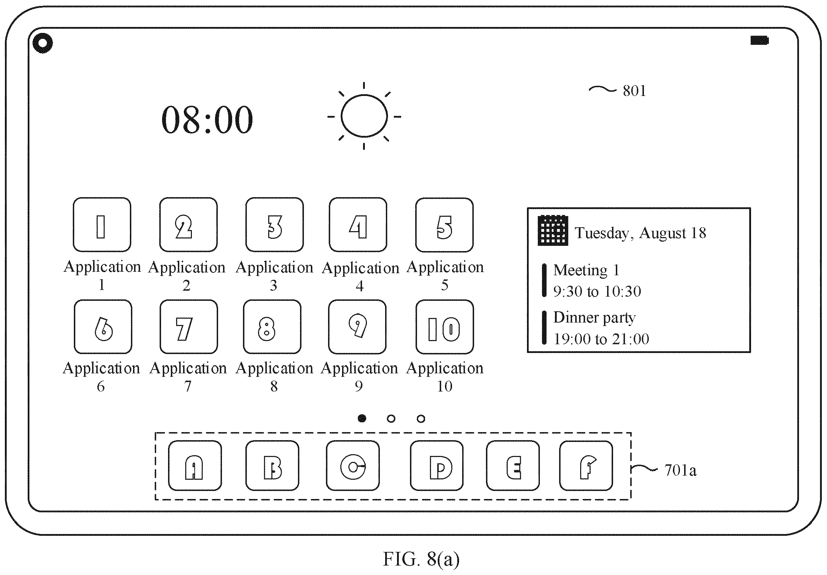

For example, the dock bar may be classified into an application dock bar and a card dock bar based on a type of content displayed in the dock bar. The application dock bar may include application icons of one or more applications, the card dock bar may include cards of one or more application services, and the card may include service content of a corresponding application service. For example, service content of a calendar service may be specific date information, and service content of a weather service may be specific weather information. Certainly, the card may further include an operation control related to a corresponding application service. For example, a music card of a music service may include an operation control, for example, a play button. As shown in FIG. 8(a), the tablet computer may display an application dock bar 701a in the launcher (for example, a first sub-screen 801 of the launcher). The application dock bar 701a includes application icons of one or more applications. For example, the application dock bar 701a may include an application icon of an application that is set by the user to reside in the dock bar 701a, or may include an application icon of a running application.

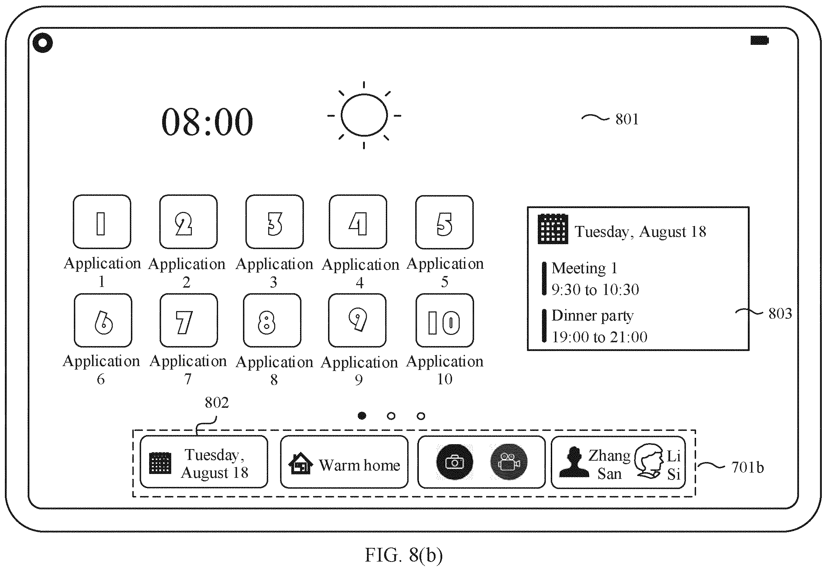

If the tablet computer detects a preset first switching operation entered by the user on the application dock bar 701a, for example, an operation of sliding the application dock bar 701a leftwards, as shown in FIG. 8(b), the tablet computer may switch, in the launcher, the application dock bar 701a to a card dock bar 701b. In this case, the tablet computer still displays the first sub-screen 801 of the launcher. For example, the card dock bar 701b includes cards of one or more application services. For example, the card in the card dock bar 701b may be pre-added by the user to the card dock bar 701b.

In some embodiments, for example, the card dock bar 701b includes a card 802 of a calendar service. The tablet computer may further display a card (for example, a card 803) of the calendar service in the launcher (for example, the first sub-screen 801). Both the card 802 and the card 803 are cards of the calendar service, but the card 802 and the card 803 may have different sizes and layout manners. For example, because display space of the launcher is larger than that of the card dock bar 701b, a size of the card 803 in the launcher may be set to be greater than a size of the card 802 in the card dock bar 701b. For example, the size of the card 803 in the launcher may be 2×2, and the size of the card 802 in the dock bar 701b may be 1×2.

After the tablet computer displays the card dock bar 701b in the launcher (for example, the first sub-screen 801), the user may further enter a preset second switching operation on the card dock bar 701b, for example, an operation of sliding the card dock bar 701b rightwards. In this case, the tablet computer may switch, in the launcher, the card dock bar 701b back to the application dock bar 701a. In other words, the card dock bar 701b and the application dock bar 701a may be switched in the launcher. The user may select a required application icon in the application dock bar 701a to quickly start a corresponding application, or the user may select a required card in the card dock bar 701b to quickly enable a corresponding application service.

In some embodiments, the tablet computer may preferentially display the card dock bar 701b or the application dock bar 701a in the launcher by default. For example, the tablet computer preferentially displays the card dock bar 701b in the launcher by default. When the tablet computer is unlocked or returns to the launcher from a display interface of an application, the tablet computer may display the card dock bar 701b in the launcher by default. Subsequently, the user may trigger, by entering the foregoing second switching operation, the tablet computer to switch the card dock bar 701b to the application dock bar 701a.

Alternatively, when the tablet computer is unlocked or returns to the launcher from a display interface of an application, if a dock bar recently displayed in the launcher is the application dock bar 701a, the tablet computer may continue to display the application dock bar 701a in the launcher this time. Alternatively, the tablet computer may collect statistics on frequency of using the card dock bar 701b and the application dock bar 701a by the user. When the tablet computer is unlocked or returns to the launcher from a display interface of an application, the tablet computer may display, in the launcher, one of the card dock bar 701b and the application dock bar 701a that is more frequently used.

In some other embodiments, in addition to classifying different types of dock bars based on the type of content displayed in the dock bar, the dock bar may further be set to a folded dock bar (namely, a mini dock), and an expanded dock bar (namely, an expanded dock), based on a display status of the dock bar. Display space occupied by the folded dock bar is generally less than display space occupied by the expanded dock bar. In addition, content displayed in the expanded dock bar can be more abundant than content displayed in the folded dock bar.

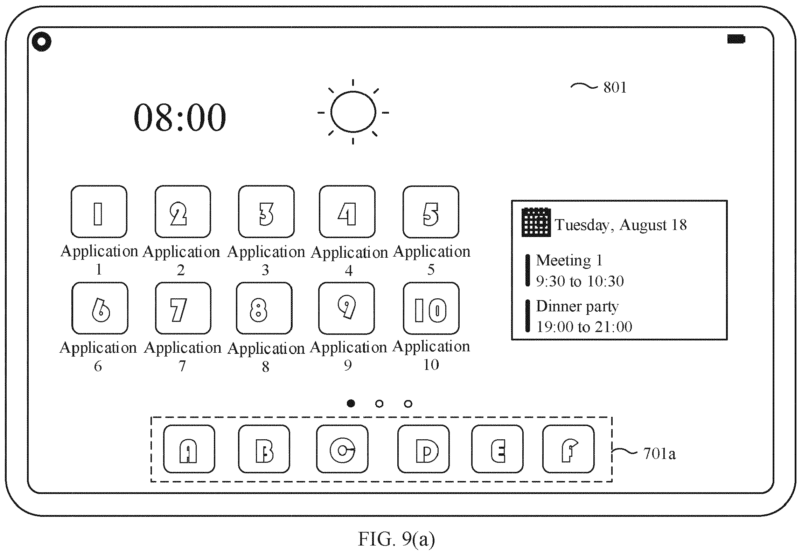

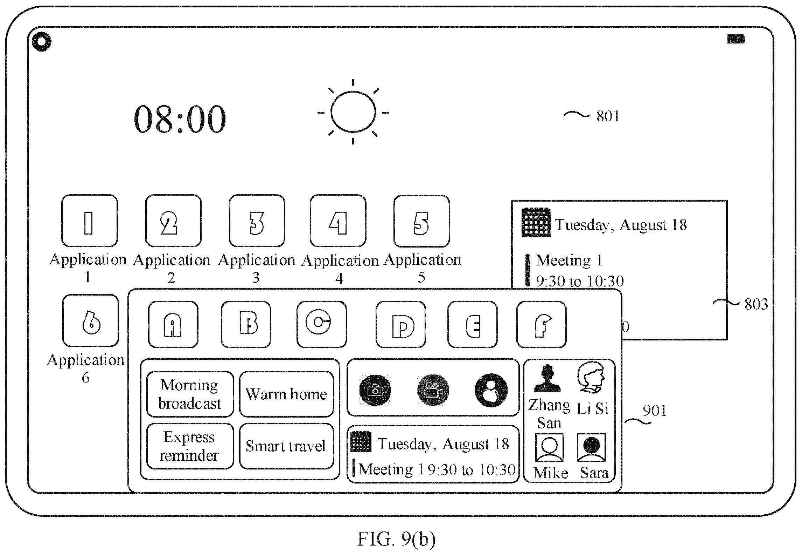

For example, the tablet computer may display the folded dock bar in the launcher, and the folded dock bar may be the application dock bar 701a, or may be the card dock bar 701b. The folded dock bar usually does not block content such as an application icon, a card, or a folder icon displayed in each sub-screen of the launcher. As shown in FIG. 9(a), for example, the tablet computer displays the application dock bar 701 a in the launcher. If it is detected that the user enters a preset expanding operation on the application dock bar 701a, for example, an operation of sliding the application dock bar 701a upwards, as shown in FIG. 9(b), the tablet computer may display an expanded dock bar 901 in the launcher. The expanded dock bar 901 may include application icons of all applications added by the user to the dock bar and cards of all application services.

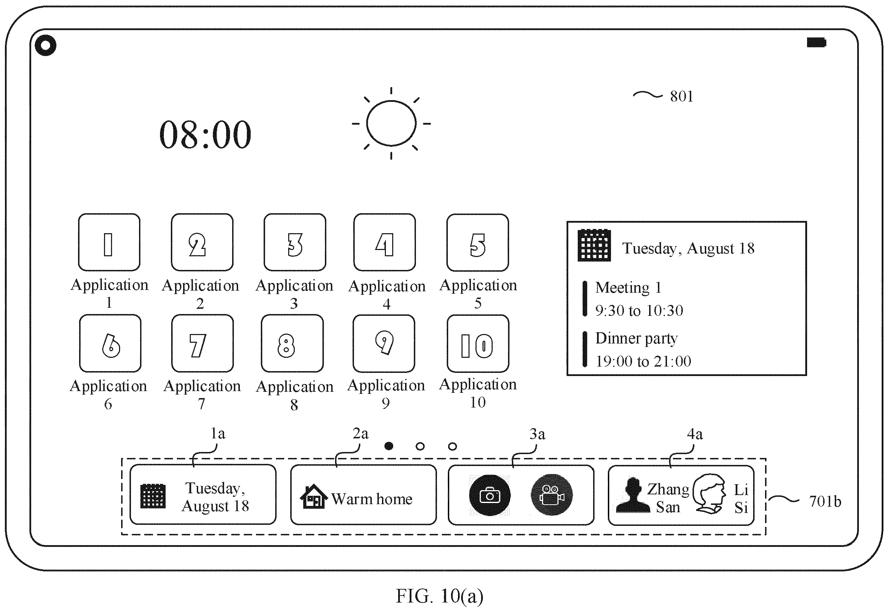

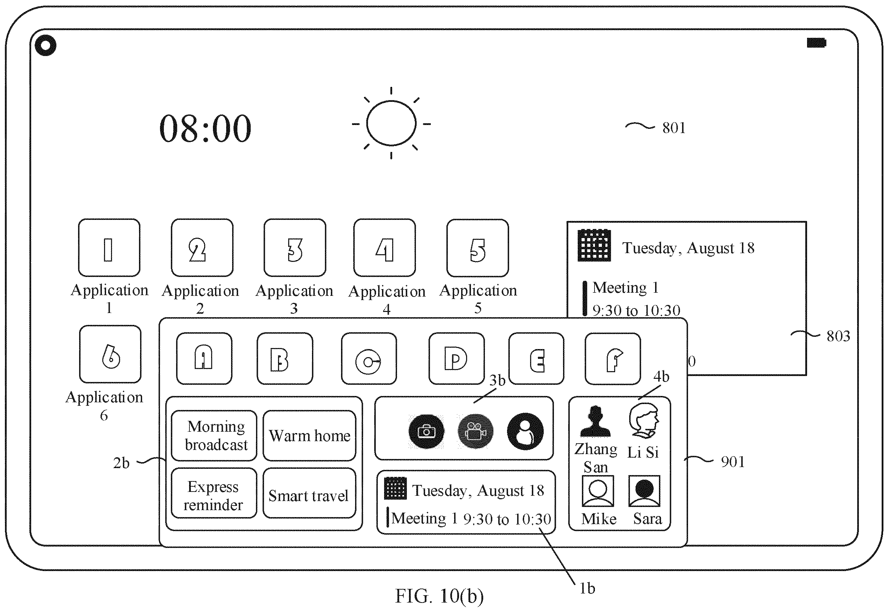

Similarly, as shown in FIG. 10(a), for example, the tablet computer displays the card dock bar 701b in the launcher. If it is detected that the user enters a preset expanding operation on the card dock bar 701b, for example, an operation of sliding the application dock bar 701a upwards, as shown in FIG. 10(b), the tablet computer may display the foregoing expanded dock bar 901 in the launcher.

In some embodiments, as shown in FIG. 9(a) and FIG. 9(b), an application icon in the application dock bar 701a may be the same as an application icon in the expanded dock bar 901. Alternatively, the expanded dock bar 901 may include more application icons. For example, the application dock bar 701a includes application icons of an application A to an application E, and the expanded dock bar 901 may include application icons of more applications other than the application A to the application E. This is not limited in this embodiment of this application.

In some embodiments, as shown in FIG. 10(a) and FIG. 10(b), cards in the card dock bar 701b may be in a one-to-one correspondence with cards in the expanded dock bar 901. For example, the card dock bar 701b includes a card 1a of an application service 1, a card 2a of an application service 2, a card 3a of an application service 3, and a card 4a of an application service 4. Correspondingly, the expanded dock bar 901 includes a card 1b of the application service 1, a card 2b of the application service 2, a card 3b of the application service 3, and a card 4b of the application service 4. Both the card 1a and the card 1b are cards of the application service 1. However, layout manners of the card 1a and the card 1b may be different, that is, different card content may be displayed for a same application service in the card dock bar 701b and the expanded dock bar 901.

For example, when the application service 1 includes a plurality of sub-services, because display space in the card dock bar 701b is limited, the card 1a displayed in the card dock bar 701b may be a card of one sub-service in the application service 1, and the card 1b displayed in the expanded dock bar 901 may include all sub-services in the application service 1. In other words, the card 1a is a subset of the card 1b, and the card 1b may be referred to as an expanded card of the card 1a. In other words, a card of a sub-service in an application service may be displayed in the card dock bar 701b, and a card including a plurality of sub-services in the application service may be displayed in the expanded dock bar 901, that is, an expanded card of the application service.

Alternatively, for a same application service, a quantity of sub-services in a corresponding card in the card dock bar 701b may be the same as a quantity of sub-services in a corresponding card in the expanded dock bar 901, but content of the card in the expanded dock bar 901 may be more than content of the corresponding card in the card dock bar 701b. For example, still as shown in FIG. 10(a), the card dock bar 701b may include the card 1a of the calendar service, and the card 1a includes an icon of a calendar APP and date information. The expanded dock bar 901 may include the card 1b corresponding to the card 1a. The card 1b is also a card of the calendar service. A difference is that the card 1b may further include related schedule information in addition to the icon and the date information of the calendar APP. In other words, card content of an application service in the expanded dock bar 901 is more abundant than card content of the application service in the card dock bar 701b.

In this way, a card in the card dock bar 701b may be used as a prompt to notify the user of a card that is of a specific application service and that is set in the dock bar. The card 1a is used as an example. After the user sees the card 1a in the card dock bar 701b, the user may learn that the card of the application service 1 is set in the dock bar. If the user needs to use a card of another sub-service in the application service 1, the user may trigger, by entering the expanding operation, the tablet computer to display the expanded dock bar 901. Because cards of a plurality of sub-services in the application service 1 are set in the expanded dock bar 901, the user may select, in the expanded dock bar 901, an application service that needs to be enabled this time. Certainly, if a card (for example, the card 1a) currently required by the user is set in the card dock bar 701b, the user may alternatively directly tap the card 1a in the card dock bar 701b, to trigger the tablet computer to enable a related sub-service in the application service 1. This is not limited in this embodiment of this application.

In some embodiments, after the tablet computer displays the expanded dock bar 901, the user may further enter a preset folding operation (for example, an operation of sliding the expanded dock bar 901 downwards) on the expanded dock bar 901. In this case, in response to the folding operation entered by the user, the tablet computer may switch the expanded dock bar 901 in the launcher back to the card dock bar 701b or the application dock bar 701a, that is, switch the dock bar from an expanded state to a folded state. Alternatively, after the tablet computer displays the expanded dock bar 901, if no operation entered by the user is detected within a preset time period, the tablet computer may automatically switch the dock bar from an expanded state to a folded state.

In some embodiments, when displaying the card dock bar 701b, the tablet computer may dynamically adjust content or a sequence of cards in the card dock bar 701b. For example, the tablet computer may collect statistics on use frequencies of the cards used by the user in the card dock bar 701b, and sort the cards in the card dock bar 701b according to the use frequencies.

For another example, the tablet computer may further collect statistics on use frequencies of sub-services used by the user in the application service. The application service 1 is still used as an example. The application service 1 may include a sub-service 1 to a sub-service 4. If the tablet computer learns that the sub-service 1 is the most frequently used sub-service in the sub-service 1 to the sub-service 4, the tablet computer may display a card of the sub-service 1 in the card dock bar 701b. Similarly, if it is learned subsequently that another sub-service (for example, the sub-service 2) is a sub-service that is most frequently used in the sub-service 1 to the sub-service 4, the tablet computer may display a card of the sub-service 2 in the card dock bar 701b.

For another example, the tablet computer may further automatically switch a card of an application service in the card dock bar 701b based on time, a location, card content, or the like. For example, the application service 1 may include a morning broadcast service (sub-service 1), a warm home service (sub-service 2), an express reminder service (sub-service 3), and a smart travel service (sub-service 4). The tablet computer may display a card of the morning broadcast service in the card dock bar 701b in a time period from 7:00 to 9:00 a.m. Alternatively, when the tablet computer detects that the tablet computer is connected to a Wi-Fi network at home in the afternoon or at night, the tablet computer may display a card of the warm home service in the card dock bar 701b. Alternatively, if the tablet computer obtains a new express message, the tablet computer may display a card of the express reminder service in the card dock bar 701b. Alternatively, if the tablet computer obtains information about a train ticket or an air ticket purchased by the user, the tablet computer may display a card of the smart travel service in the card dock bar 701b. Alternatively, the tablet computer can automatically switch, by using a corresponding intelligent recommendation algorithm, a card of an application service in the card dock bar 701b. This is not limited in this embodiment of this application.

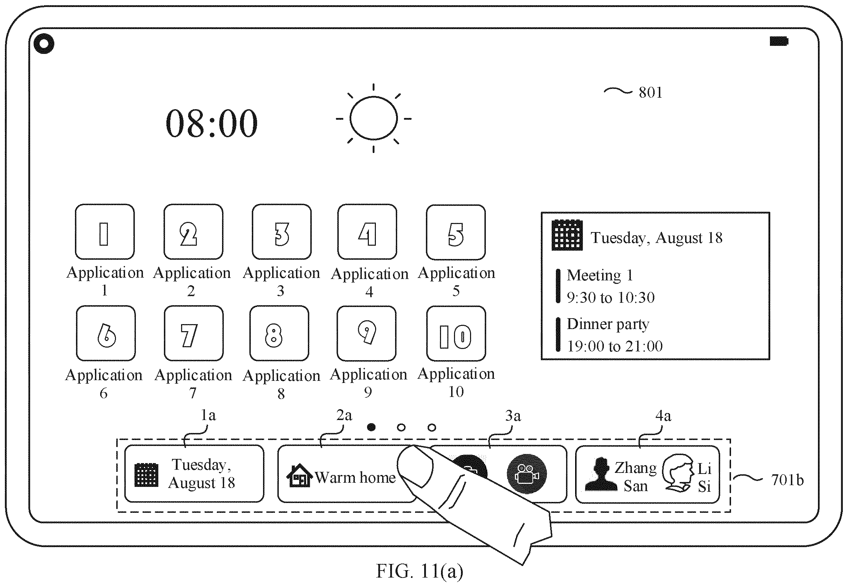

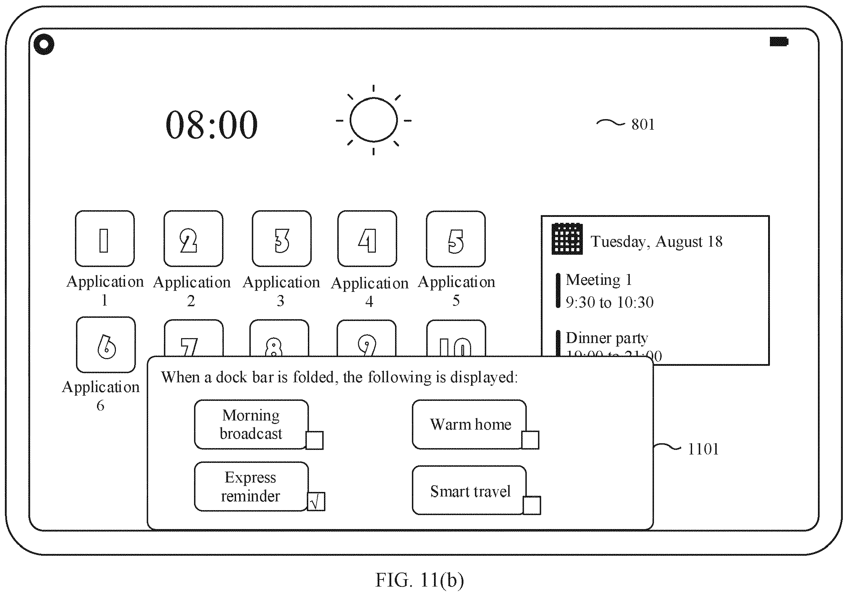

In some other embodiments, the user may further manually adjust a specific card of an application service that is displayed in the card dock bar 701b. For example, as shown in FIG. 11(a), the tablet computer may display the card dock bar 701b in the launcher, and the card dock bar 701b includes a card 2a of the sub-service 1 (for example, the warm home service) in the application service 1. If the user wants to display a card of another sub-service in the application service 1 in the card dock bar 701b, the user may enter a preset operation on the card 2a, for example, an operation of touching and holding the card 2a. In this way, in response to the preset operation entered by the user on the card 2a, as shown in FIG. 11(b), the tablet computer may display a setting menu 1101 corresponding to the application service 1. The setting menu 1101 may include cards of sub-services in the application service 1, for example, a card of the morning broadcast service, a card of the warm home service, a card of the express reminder service, and a card of the smart travel service. The user may manually select a card as a representative of the application service 1, for display in the card dock bar 701b. For example, if it is detected that the user selects the card of the express reminder service, the tablet computer may return to the launcher to display the card dock bar 701b. In this case, the card dock bar 701b displays the card of the express reminder service, and no longer displays the card of the warm home service.

Alternatively, still as shown in FIG. 11(b), the user may select, in the setting menu 1101, a plurality of cards as representatives of the application service 1, for display in the card dock bar 701b. For example, if it is detected that the user selects the card of the express reminder service and the card of the smart travel service in the setting menu 1101, the tablet computer may display both the card of the express reminder service and the card of the smart travel service in the card dock bar 701b.

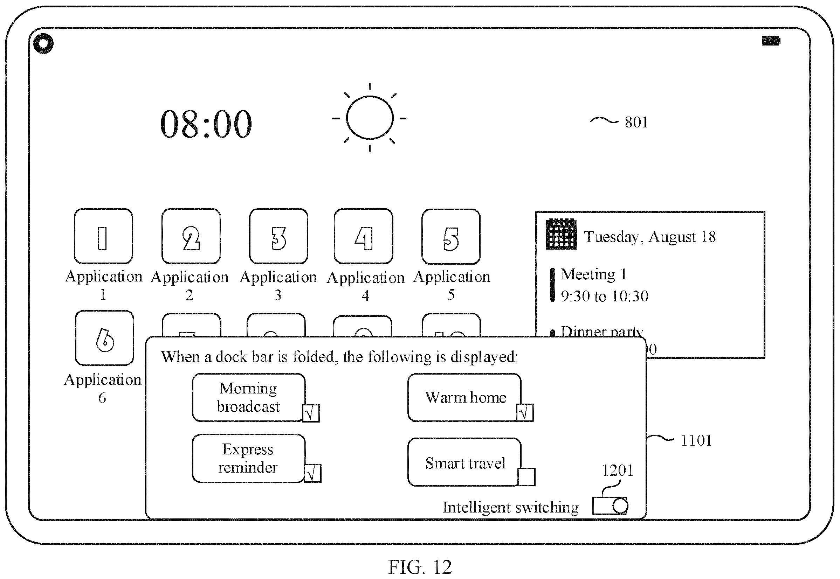

Alternatively, as shown in FIG. 12, if it is detected that the user selects a plurality of cards in the setting menu 1101, the tablet computer may further provide an intelligent switching option 1201. If it is detected that the user enables the intelligent switching option 1201, the tablet computer may select, according to a preset selection policy, one of the plurality of cards selected by the user, for display in the card dock bar 701b. For example, the user selects the card of the morning broadcast service, the card of the warm home service, and the card of the express reminder service. The tablet computer may periodically display the three cards in the card dock bar 701b by using N hours as a cycle. Alternatively, the tablet computer may further select, based on parameters such as time, a location, or card content, one of the plurality of cards selected by the user, for display in the card dock bar 701b. Certainly, the tablet computer may alternatively select two or more cards from the plurality of cards selected by the user, for display in the card dock bar 701b.

Alternatively, the tablet computer may further prompt, in the setting menu 1101, the user to select a size of a card to be displayed in the card dock bar 701b. For example, if the user chooses to display a card of a size of 1×2 in the card dock bar 701b, when displaying a card of an application service in the card dock bar 701b, the tablet computer may switch between different sub-services in the application service in the card of the size of 1×2. This is not limited in this embodiment of this application.

Alternatively, the user may further set, in the setting menu 1101, that no card related to the application service 1 is displayed in the card dock bar 701b. For example, the user may not select any card in the setting menu 1101. In this case, the tablet computer may not display, by default, any card related to the application service 1 when displaying the card dock bar 701b. However, when the tablet computer switches the displayed card dock bar 701b to the expanded dock bar 901, the tablet computer may further display, in the expanded dock bar 901, a card including the sub-services in the application service 1.

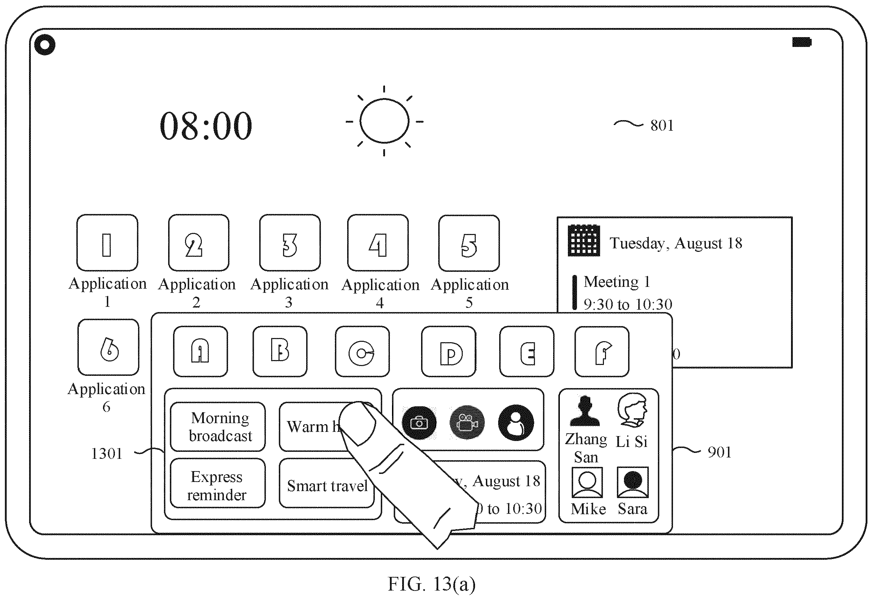

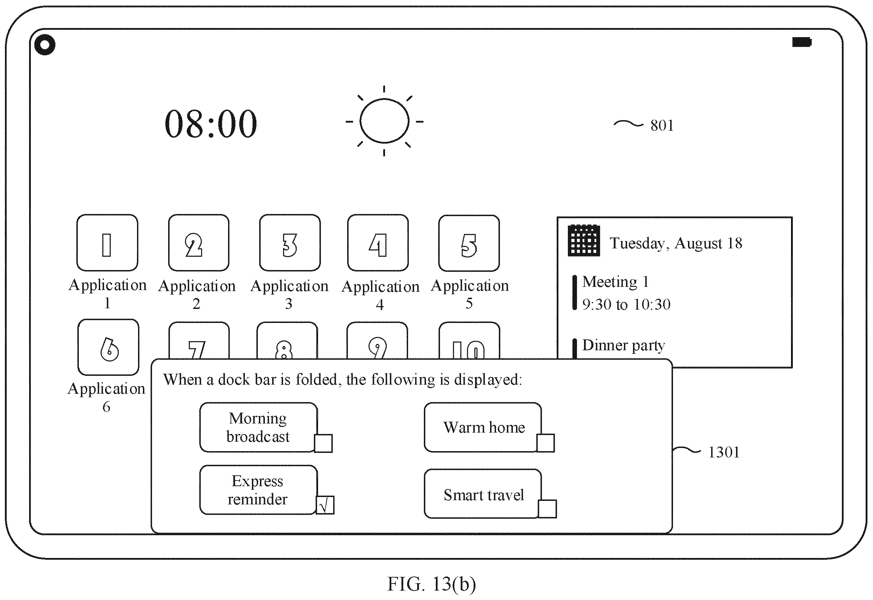

In some other embodiments, the user may further manually adjust, in the expanded dock bar 901, a specific card displayed in the card dock bar 701b. For example, as shown in FIG. 13(a), the tablet computer may display, in the launcher, the expanded dock bar 901, where the dock bar 901 includes a card 1301 of the application service 1, and the card 1301 specifically includes the cards of the sub-services in the application service 1. If the user needs to set a specific card that is in the card dock bar 701b and that is used to represent the application service 1, the user may enter a preset operation on the card 1301, for example, an operation of touching and holding the card 1301. In this way, in response to the preset operation entered by the user on the card 1301, as shown in FIG. 13(b), the tablet computer may display a setting menu 1301 corresponding to the application service 1. Similar to the setting menu 1101, the setting menu 1301 may include the cards of the sub-services in the application service 1. In this way, similar to the foregoing embodiment, the user may select one or more cards in the setting menu 1301 as representatives of the application service 1, for display in the card dock bar 701b.

It should be noted that the setting menu 1301 (or the setting menu 1101) may be displayed in the launcher in a form of a dialog box, or may be displayed in the launcher in a full-screen form. A person skilled in the art may set a specific display layout manner. This is not limited in this embodiment of this application.

In the foregoing embodiment, regardless of the card dock bar 701b or the application dock bar 701a, when the dock bar is switched from the folded state to the expanded state, the tablet computer displays the expanded dock bar 901. In some other embodiments, a dock bar displayed after the tablet computer expands the card dock bar 701b may be different from a dock bar displayed after the application dock bar 701a is expanded.

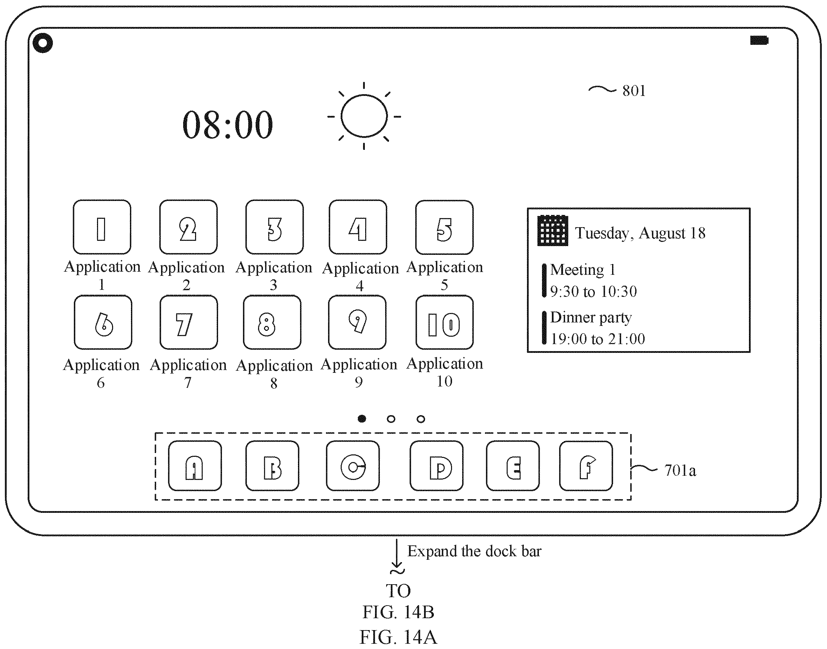

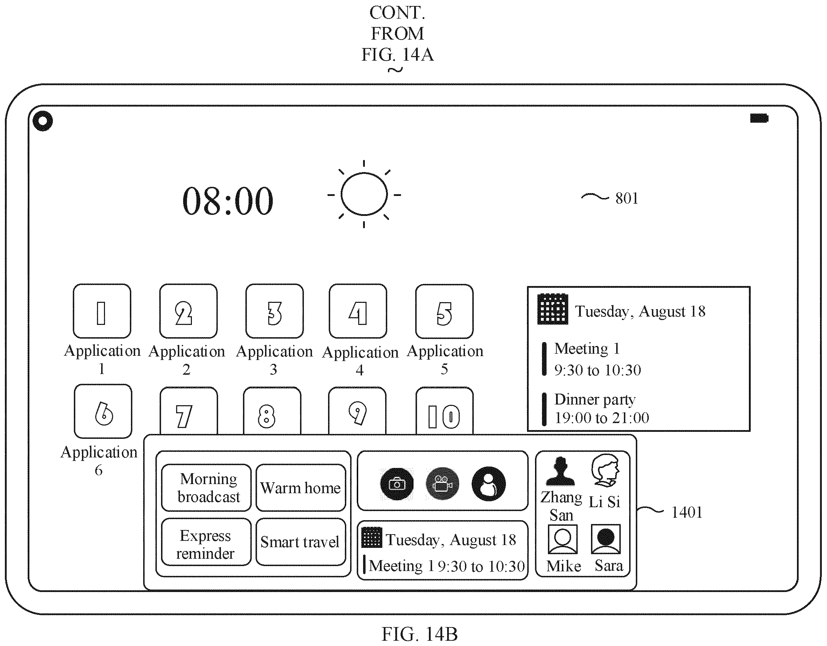

For example, as shown in FIG. 14A and FIG. 14B, after the tablet computer displays the application dock bar 701a in the launcher, if it is detected that the user enters a preset expanding operation on the application dock bar 701a, the tablet computer may display an expanded first dock bar 1401 in the launcher. The first dock bar 1401 may include cards of one or more application services. In this way, when the user does not find a currently required icon in the application dock bar 701a, the user may trigger, by using an expanding operation, the tablet computer to display the cards of the application services in the first dock bar 1401, to search the first dock bar 1401 for the currently required icon. Alternatively, if it is detected that the user enters a preset expanding operation on the application dock bar 701a, the tablet computer may display, in the first dock bar 1401, application icons of more applications except the application A to an application F.

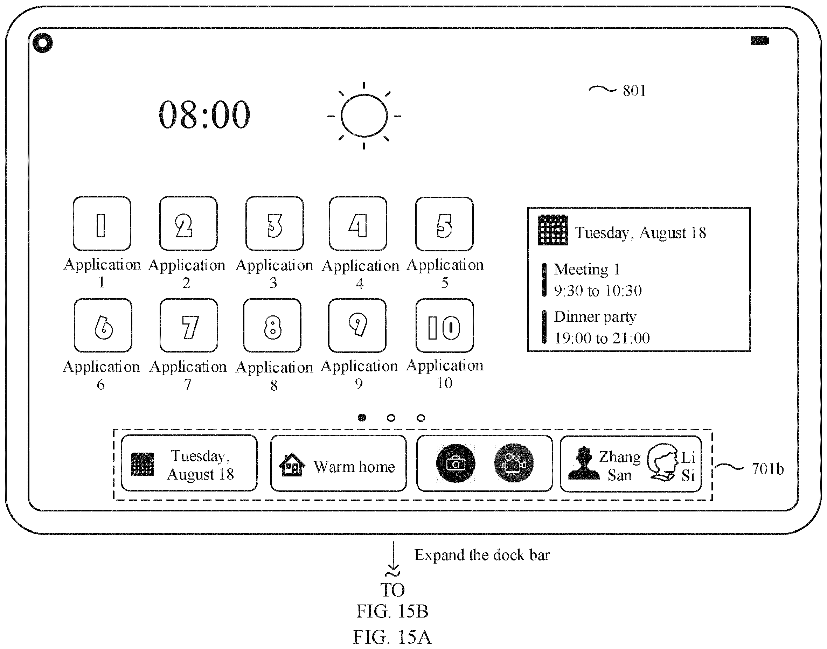

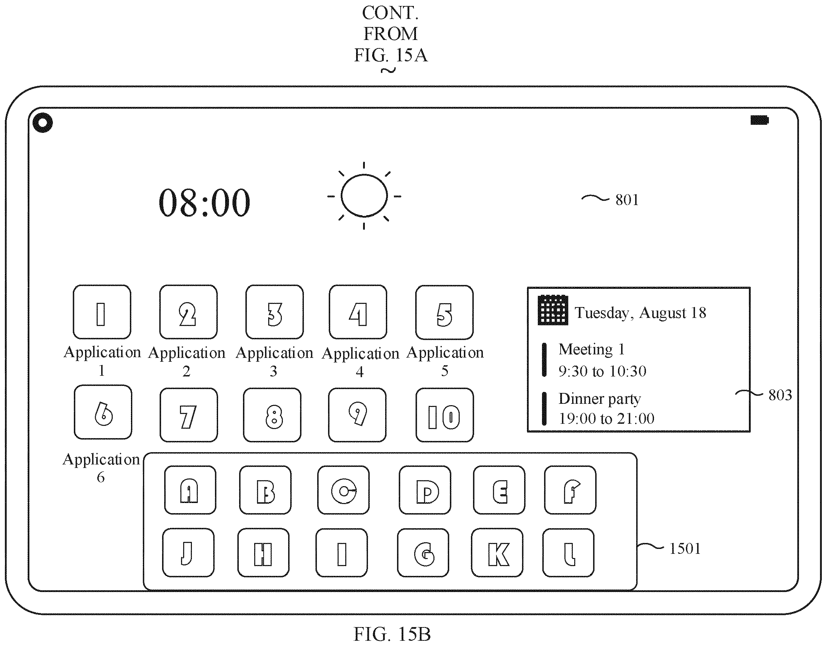

For another example, as shown in FIG. 15A and FIG. 15B, after the tablet computer displays the card dock bar 701b in the launcher, if it is detected that the user enters a preset expanding operation on the card dock bar 701b, the tablet computer may display an expanded second dock bar 1501 in the launcher. The second dock bar 1501 may include application icons of one or more applications. In this way, when the user does not find a currently required icon in the card dock bar 701b, the user may trigger, by using an expanding operation, the tablet computer to display application icons of applications in the second dock bar 1501, to search the second dock bar 1501 for the currently required icon. Alternatively, if it is detected that the user enters a preset expanding operation on the card dock bar 701b, the tablet computer may display more application service cards or the like in the second dock bar 1501. This is not limited in this embodiment of this application.

In some embodiments, after the tablet computer displays the card dock bar 701b or the expanded dock bar 901 in the launcher, the user may further manually add a new card to the card dock bar 701b or the expanded dock bar 901.

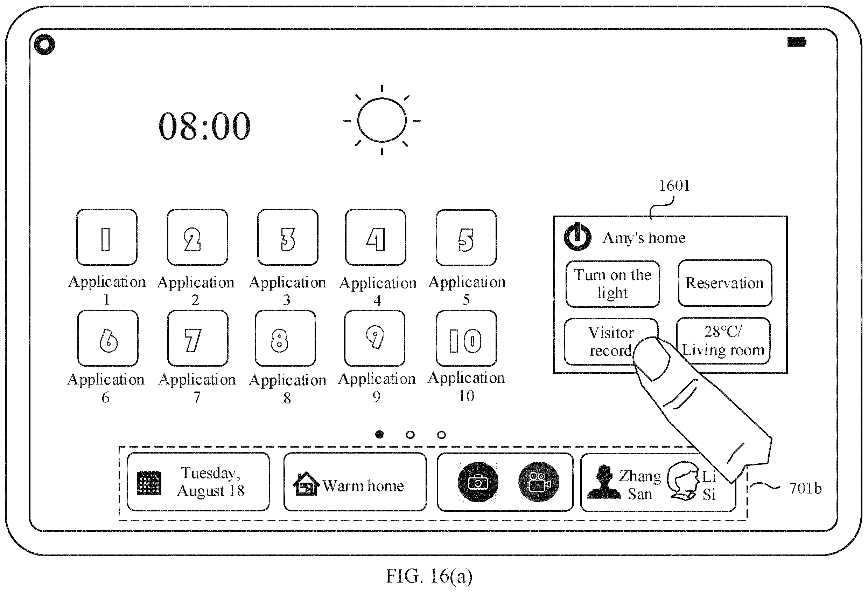

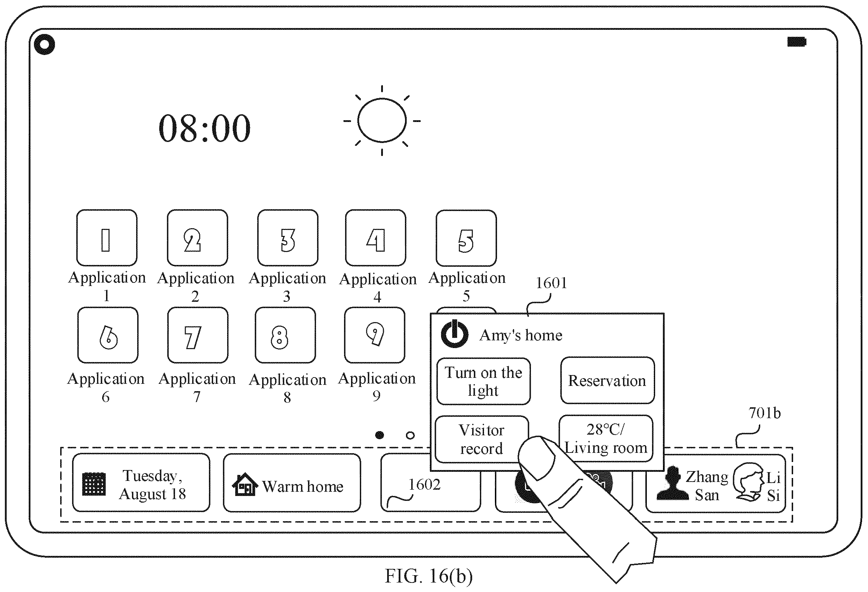

For example, as shown in FIG. 16(a), after the tablet computer displays the card dock bar 701b in the launcher, the user may drag a card in the launcher to add the card in the launcher to the card dock bar 701b. For example, as shown in FIG. 16(b), after it is detected that a card 1601 of the application service 2 in the launcher is dragged to an area in which the card dock bar 701b is located, the tablet computer may display a placeholder box 1602 in the card dock bar 701b, to prompt the user to add the application service 2 to a location in which the placeholder box 1602 is located. Alternatively, when it is detected that a card 1601 of the application service 2 in the launcher is dragged to the application dock bar 701a, the tablet computer may automatically switch the application dock bar 701a to the card dock bar 701b, and then display a placeholder box 1602 in the card dock bar 701b.

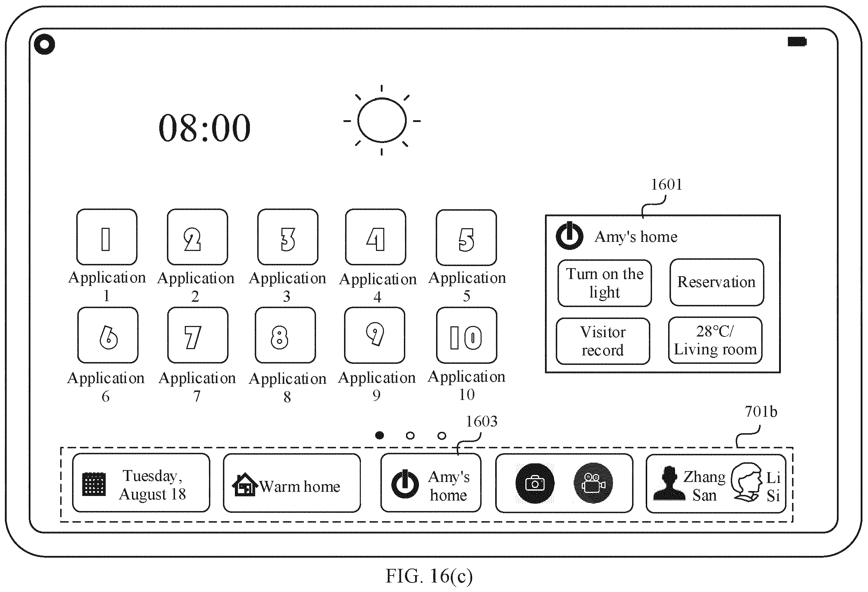

Subsequently, if it is detected that a finger of the user leaves the launcher, as shown in FIG. 16(c), the tablet computer may add the application service 2 to the placeholder box 1602 of the card dock bar 701b. For example, the displayed card 1601 of the application service 2 in the launcher is a card including sub-services in the application service 2. After the card of the application service 2 is added to the card dock bar 701b, the tablet computer may display a card (for example, a card 1603) of one sub-service in the application service 2 in the card dock bar 701b.

In some embodiments, when the user drags the card 1601 to move towards the card dock bar 701b, the tablet computer may further dynamically adjust a size, a shape, or content of the card 1601. For example, in a process in which the card 1601 approaches the card dock bar 701b, the tablet computer may gradually reduce the size of the card 1601. After the card 1601 or a part of the card 1601 enters the card dock bar 701b, the tablet computer may switch the card 1601 to the card 1603. In this way, in a process of adding a card to the card dock bar 701b, blocking of a display interface when the card is dragged may be reduced, and the user is guided to locate a specific location of the card in the card dock bar 701b. In addition, the user may be further notified of specific content displayed after the card 1601 is added to the card dock bar 701b, thereby improving user experience.

For another example, in a process in which the card 1601 approaches the card dock bar 701b, the tablet computer may alternatively replace the dragged card 1601 with an application icon of a small size, to reduce a bad display effect such as erratic display caused by dragging a control with a relatively large area, such as the card 1601.

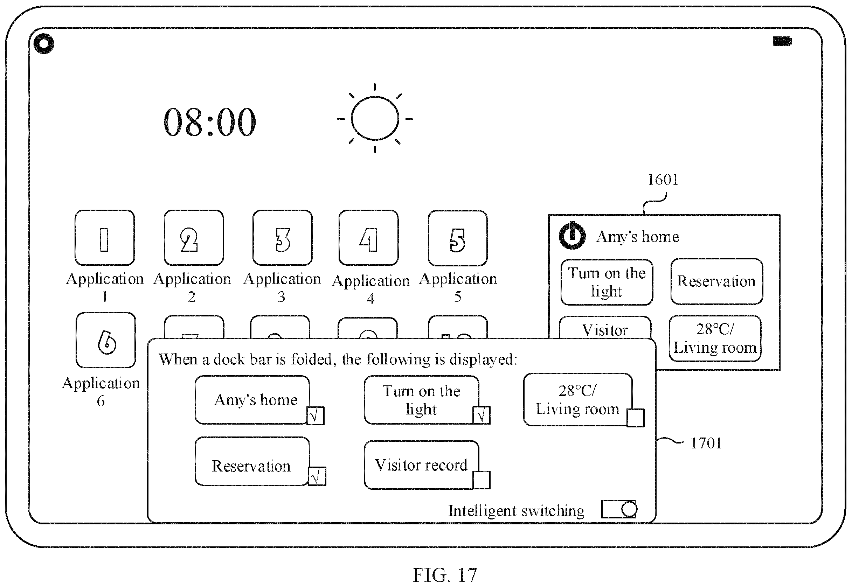

In the foregoing embodiment, after the user drags the card 1601 to the card dock bar 701b, if it is detected that the finger of the user leaves the launcher, as shown in FIG. 17, the tablet computer may further display a setting menu 1701 corresponding to the application service 2. Similar to the setting menu 1101 and the setting menu 1301, the setting menu 1701 includes the cards of the sub-services in the application service 2. In this way, the user may select one or more cards in the setting menu 1701 as representatives of the application service 2, for display in the card dock bar 701b.

Alternatively, the user may directly add a sub-service of an application service (for example, the application service 2) to the card dock bar 701b. For example, the tablet computer may display a card of the application service 2 in the launcher, and the card may include the cards of the sub-services in the application service 2. In this case, if it is detected that the user drags a card of a sub-service of the application service 2 in the launcher to the card dock bar 701b, the tablet computer may directly display the card of the sub-service as a representative of the application service 2 in the card dock bar 701b.

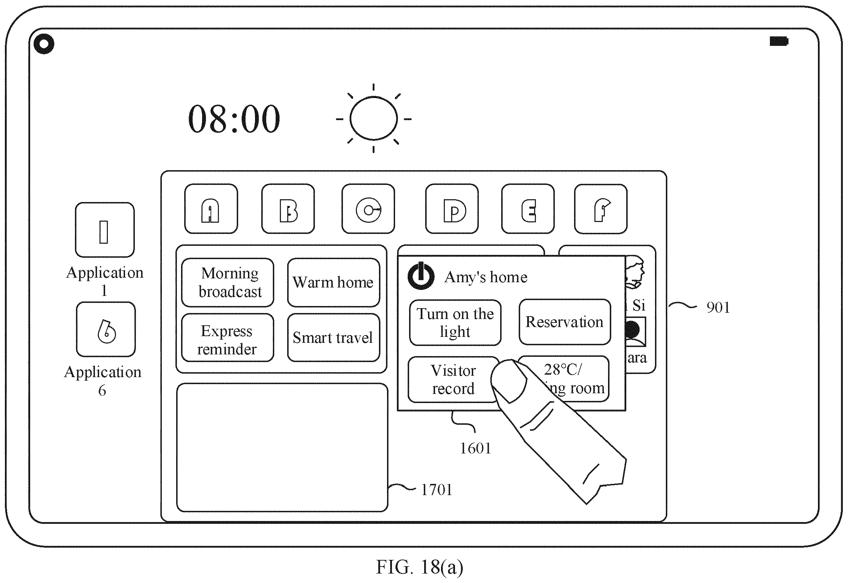

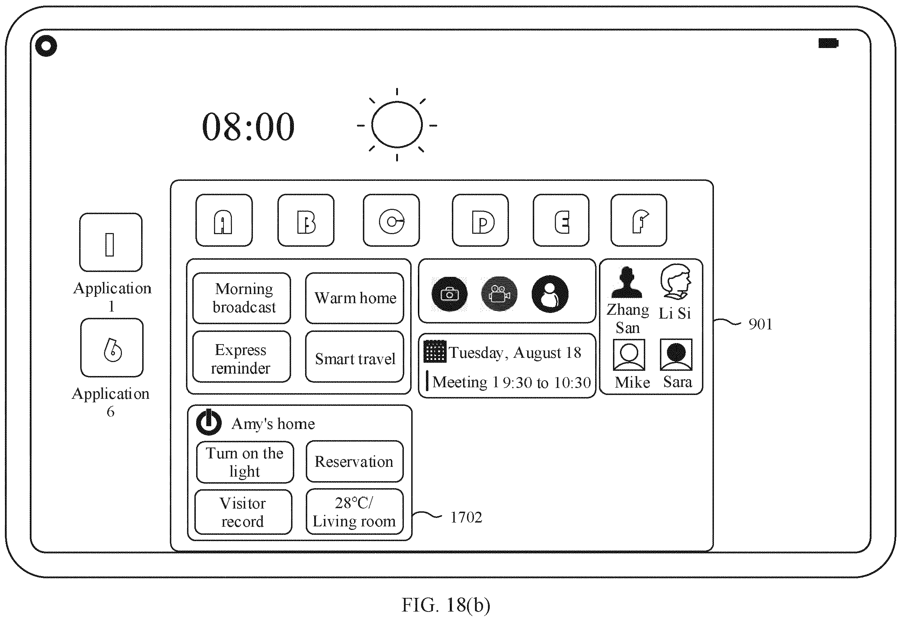

Alternatively, still as shown in FIG. 16(a), after the tablet computer displays the card dock bar 701b in the launcher, the user may drag the card 1601 of the application service 2 in the launcher to the area in which the card dock bar 701b is located. In this case, different from the foregoing embodiment, as shown in FIG. 18(a), the tablet computer may switch the card dock bar 701b to the expanded dock bar 901, and display a placeholder box 1701 in the expanded dock bar 901, to prompt the user to add the application service 2 to a location in which the placeholder box 1701 is located. Subsequently, if it is detected that the finger of the user leaves the launcher, as shown in FIG. 18(b), the tablet computer may add the application service 2 to the placeholder box 1701 of the expanded dock bar 901. For example, the card 1702 of the application service 2 is added to the placeholder box 1701 of the expanded dock bar 901. In other words, when the user adds a card in the launcher to the card dock bar 701b, the tablet computer may be further triggered to switch the card dock bar 701b to the expanded dock bar 901, to add, to the expanded dock bar 901, a card that includes a plurality of sub-services of a related application service.

In some embodiments, after the tablet computer adds the card 1601 of the application service 2 to the expanded dock bar 901, similar to the interface shown in FIG. 17, the tablet computer may further automatically display the setting menu 1701 corresponding to the application service 2, where the setting menu 1701 includes the cards of the sub-services in the application service 2. In this way, the user may select one or more cards in the setting menu 1701 as representatives of the application service 2, for display in the card dock bar 701b.

In some other embodiments, in addition to adding a card in the launcher to the card dock bar 701b or the expanded dock bar 901, the user may further add a card in the card dock bar 701b or the expanded dock bar 901 to the launcher.

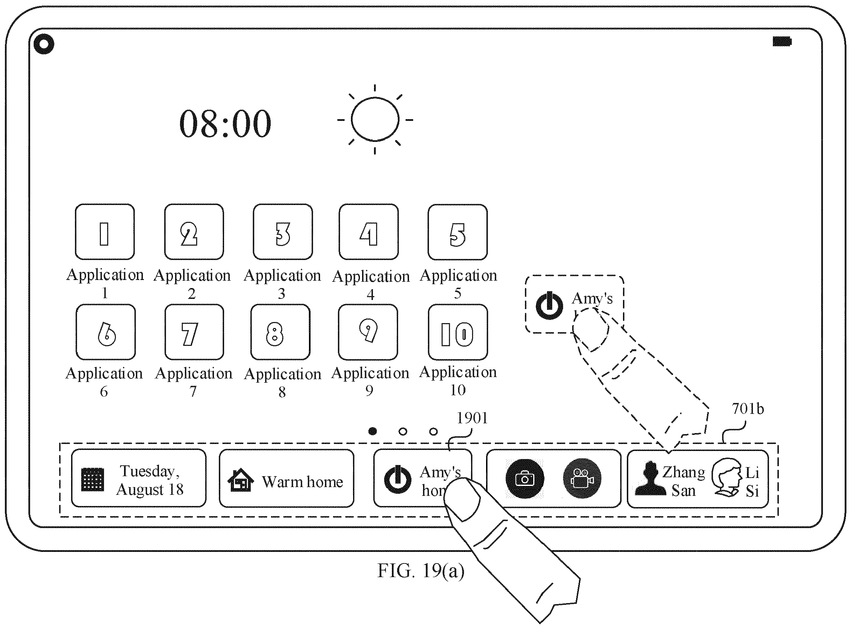

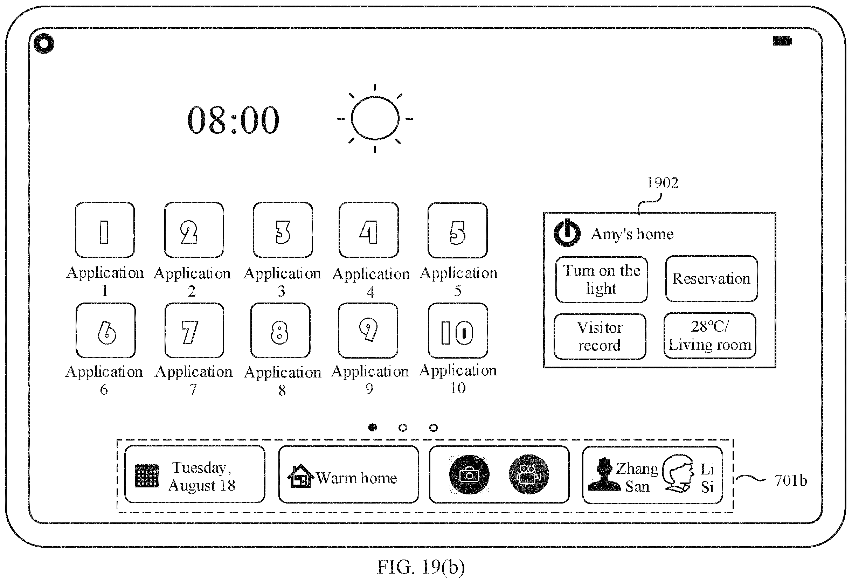

For example, as shown in FIG. 19(a), after the launcher displays the card dock bar 701b, if it is detected that the user drags a card 1901 of the application service 3 in the card dock bar 701b to the launcher and then releases the card, as shown in FIG. 19(b), the tablet computer may display, in a corresponding location in the launcher, a card 1902 including a plurality of sub-services in the application service 3. Alternatively, the tablet computer may display the card 1901 at a corresponding location in the launcher, that is, a card of one sub-service in the application service 3. This is not limited in this embodiment of this application.

It should be noted that, after displaying the card 1901 or the card 1902 in the launcher according to the foregoing method, the tablet computer may continue to display the card 1901 of the application service 3 in the card dock bar 701b, or may no longer display the card 1901 in the card dock bar 701b.

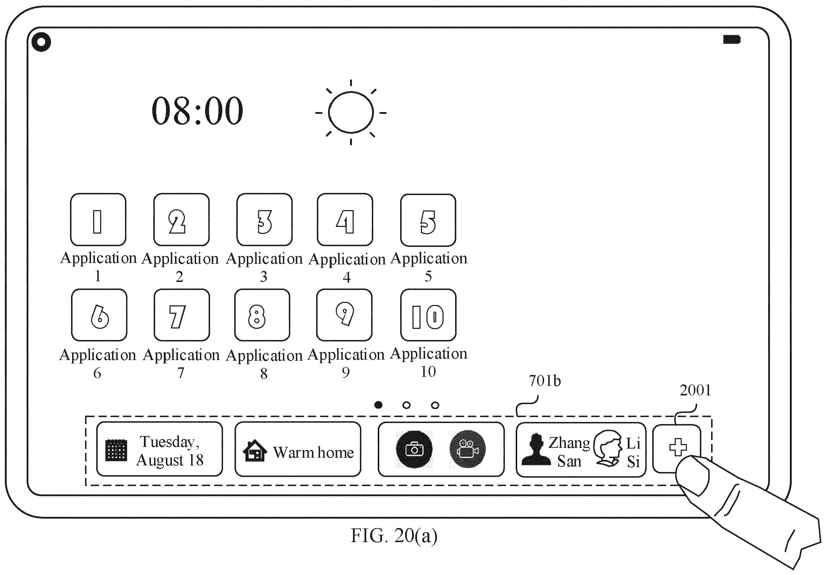

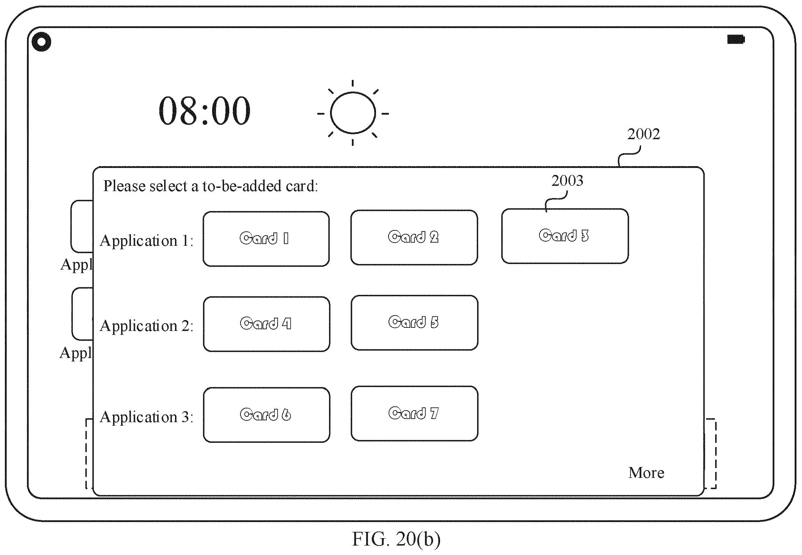

In addition, the user may alternatively add a card to the card dock bar 701b or the expanded dock bar 901 in another manner. For example, as shown in FIG. 20(a), the tablet computer may display the card dock bar 701b in the launcher, and the card dock bar 701b may include an add button 2001. If it is detected that the user taps the add button 2001, as shown in FIG. 20(b), the tablet computer may display a setting interface 2002 for adding a card. The setting interface 2002 may include candidate cards 2003 of application services, and the user may select one or more candidate cards 2003 from these candidate cards 2003 and add the candidate cards 2003 to the card dock bar 701b. The candidate card 2003 in the setting interface 2002 may be a card including a plurality of sub-services in an application service, or may be a card of one sub-service in an application service. Similarly, after the candidate card 2003 is added to the card dock bar 701b, cards of one or more corresponding sub-services may be displayed in the card dock bar 701b. This is not limited in this embodiment of this application.

Correspondingly, when the tablet computer displays the expanded dock bar 901 in the launcher, the tablet computer may also display the foregoing add button 2001 in the expanded dock bar 901. In this way, the user may add a card to the card dock bar 701b or the expanded dock bar 901 by triggering the add button 2001 according to the foregoing method.

In the foregoing embodiment, a method for manually adding a card by the user to the card dock bar 701b or the expanded dock bar 901 is described. In some other embodiments, the tablet computer may alternatively automatically recommend, in the card dock bar 701b or the expanded dock bar 901, a related card to the user for adding.

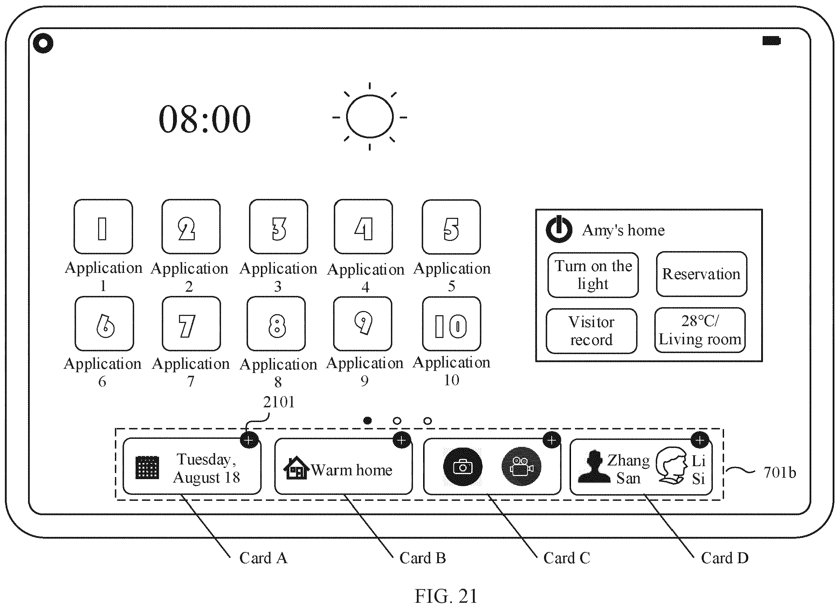

For example, when it is detected that the user uses the dock bar displayed on the tablet computer for the first time, the tablet computer may prompt the user whether to enable a function of displaying a card in the dock bar. If the user agrees to display the card in the dock bar, as shown in FIG. 21, the tablet computer may display, in the card dock bar 701b, a group of recommended cards (for example, a card A to a card D) recommended to the user. For example, the tablet computer may display cards of N (N is an integer greater than 0) application services that are most frequently used by the user in a recent time period (for example, one week) as recommended cards in the card dock bar 701b. For another example, the tablet computer may obtain, from a server, cards of N application services with relatively high popularity as recommended cards, and display the recommended cards in the card dock bar 701b.

For example, the card A to the card D are the recommended cards. When the tablet computer displays the card A to the card D in the card dock bar 701b, an add button 2101 may be set on each of the card A to the card D. If the user confirms to add a recommended card to the card dock bar 701b, the user may tap an add button 2101 on the corresponding recommended card. For example, if it is detected that the user taps an add button 2101 on the card A, the tablet computer may add the card A to the card dock bar 701b. In this case, the card A resides in the card dock bar 701b, and the add button 2101 on the card A may no longer be displayed.

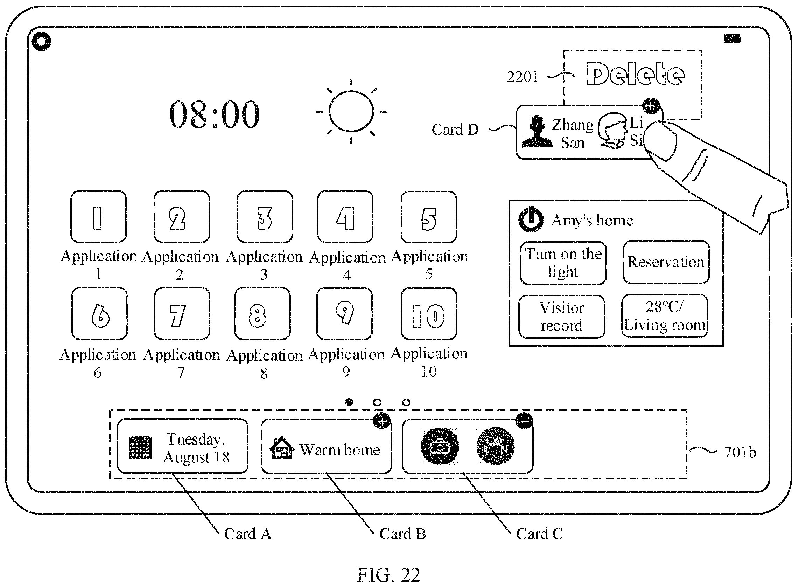

Correspondingly, if the user does not need a recommended card recommended by the tablet computer in the card dock bar 701b, the user may enter a preset deletion operation on the corresponding recommended card, and trigger the tablet computer to delete the corresponding recommended card from the card dock bar 701b. For example, as shown in FIG. 22, if it is detected that the user drags the recommended card D to a place near a preset deletion area 2201 in the launcher, the tablet computer may delete the card D from the card dock bar 701b. In addition, the tablet computer may further delete, from the expanded dock bar 901, a card corresponding to the card D. Similarly, for a card (for example, the card A in FIG. 22) that has been added to the card dock bar 701b, the user may further trigger, by entering the foregoing deletion operation, the tablet computer to delete the added card from the card dock bar 701b and/or the expanded dock bar 901.

Alternatively, after the tablet computer displays, in the card dock bar 701b, a group of recommended cards recommended to the user, if it is not detected that the user taps an add button on a corresponding recommended card within a preset time period, it indicates that the user may not want to add the recommended card, and the tablet computer may automatically delete the corresponding recommended card from the card dock bar 701b.

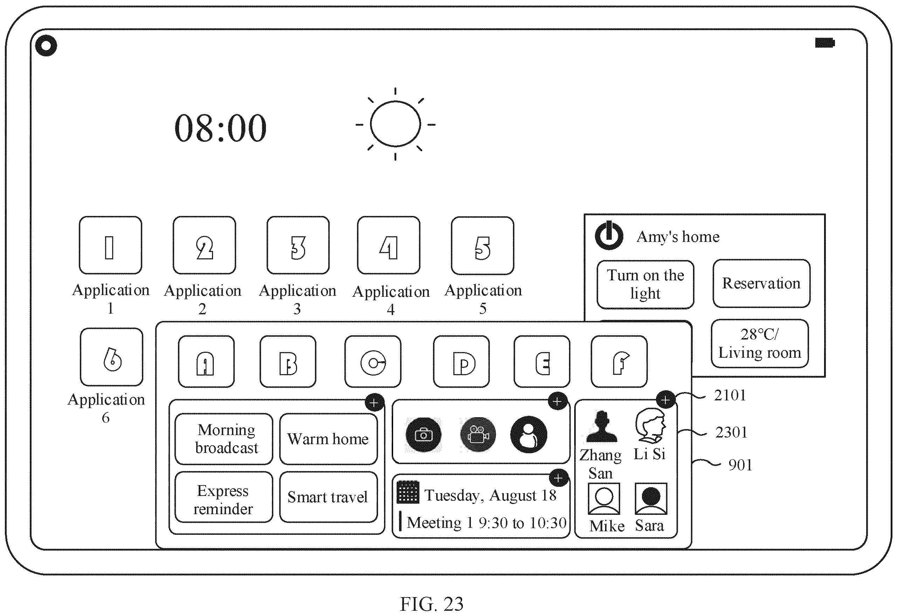

In some other embodiments, still as shown in FIG. 21, after the tablet computer displays, in the card dock bar 701b, a group of recommended cards recommended to the user, if it is detected that the user enters an expanding operation on the card dock bar 701b, as shown in FIG. 23, the tablet computer may display the expanded dock bar 901 in the launcher. In this case, the expanded dock bar 901 also includes the foregoing recommended cards. A difference lies in that recommended cards in the expanded dock bar 901 may include cards of a plurality of sub-services in corresponding application services. An add button 2101 is also set on each recommended card in the expanded dock bar 901. For example, if it is detected that the user taps an add button 2101 on a recommended card 2301, the tablet computer may add the recommended card 2301 to the expanded dock bar 901. Optionally, the tablet computer may prompt, according to the foregoing method, the user to select cards of one or more sub-services in the recommended cards 2301, as representatives of a corresponding application service, for display in the card dock bar 701b.

Similarly, after the tablet computer displays the recommended cards in the expanded dock bar 901, the user may further enter a preset deletion operation on a corresponding recommended card, to trigger the tablet computer to delete the corresponding recommended card from the expanded dock bar 901.

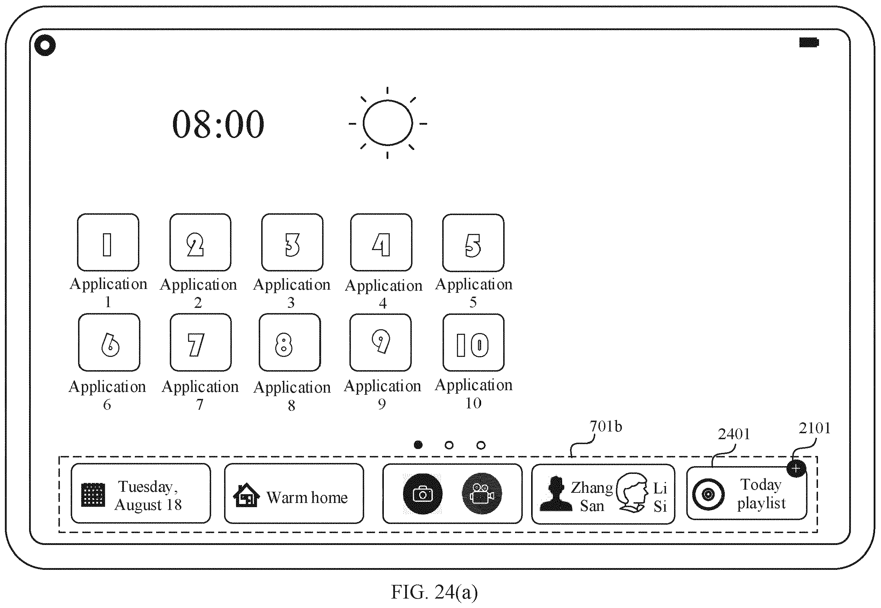

In some other embodiments, the tablet computer may alternatively dynamically recommend a corresponding recommended card in the current card dock bar 701b or expanded dock bar 901 based on a use habit of the user or an application scenario. For example, after the tablet computer detects that the tablet computer is connected to a sound box, it indicates that a current application scenario is probably an audio playback scenario. In this case, as shown in FIG. 24(a), the tablet computer may display a card 2401 of a today playlist sub-service in a music service as a recommended card in the card dock bar 701b, and an add button 2101 may also be set on the card 2401. If it is detected that the user taps the add button 2101 on the card 2401, the tablet computer may add the card 2401 to the card dock bar 701b, so that the card 2401 resides in the card dock bar 701b.

Similarly, if the user does not need to add the card 2401 to the card dock bar 701b, the user may further input the foregoing preset deletion operation on the card 2401, to trigger the tablet computer to delete the card 2401 from the card dock bar 701b. Alternatively, if the user does not enter any operation on the card 2401 within a preset time period, the tablet computer may automatically delete the card 2401 from the card dock bar 701b.

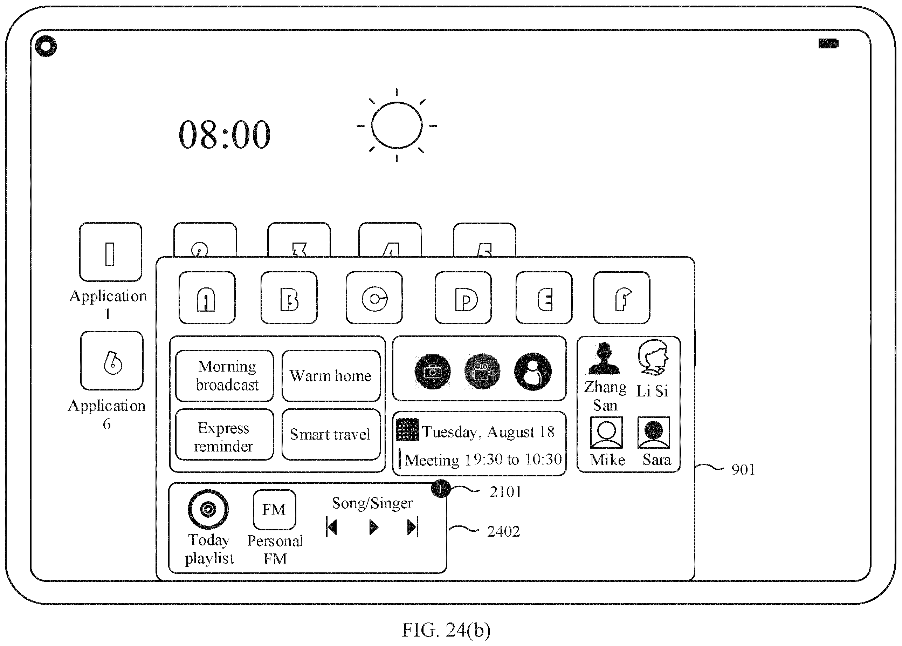

For example, after the tablet computer displays the card 2401 as a recommended card in the card dock bar 701b, if it is detected that the user enters an expanding operation on the card dock bar 701b, as shown in FIG. 24(b), the tablet computer may switch the card dock bar 701b to the expanded dock bar 901, and display a card 2402 of the music service in the expanded dock bar 901. The card 2401 of the today playlist sub-service may be used as a part of the card 2402. Similarly, an add button 2101 may also be set on the card 2402. If it is detected that the user taps the add button 2101 on the card 2402, the tablet computer may add the card 2402 to the expanded dock bar 901, so that the card 2402 resides in the expanded dock bar 901. Optionally, the tablet computer may prompt, according to the foregoing method, the user to select cards of one or more sub-services in the recommended cards 2402 as representatives of the music service, for display in the card dock bar 701b.

It can be learned that in this embodiment of this application, more abundant application functions may be provided for the user in the dock bar. For example, the dock bar may be divided into an application dock bar and a card dock bar based on specific display content of the dock bar, and the user may switch between the application dock bar and the card dock bar based on a requirement of the user. For another example, the dock bar may be divided into a folded dock bar and an expanded dock bar based on a display state of the dock bar, and the user may switch between the folded dock bar and the expanded dock bar based on a requirement of the user. In this way, the user can quickly find a currently required application or application service by using the dock bar, and the user does not need to search for a related application or application service by turning pages in a plurality of sub-screens of the launcher, thereby improving user experience.

It should be noted that, in the foregoing embodiment, the tablet computer is used as an example to describe how to implement the foregoing method for displaying the dock bar in the launcher. It may be understood that any electronic device on which the launcher is set may display the dock bar in the launcher according to the foregoing method. This is not limited in this embodiment of this application.

An embodiment of this application discloses an electronic device, including a processor, and a memory, an input device, and an output device that are connected to the processor. The input device and the output device may be integrated into one device. For example, a touch sensor (touch sensor or touch panel) may be used as the input device, a display (display) may be used as the output device, and the touch sensor and the display may be integrated into a touchscreen (touchscreen).

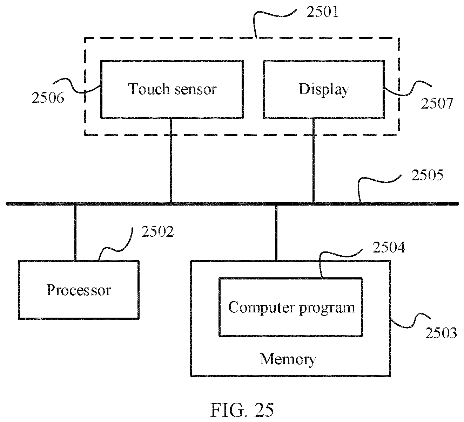

As shown in FIG. 25, the electronic device may include a touchscreen 2501, where the touchscreen 2501 includes a touch sensor 2506 and a display 2507, one or more processors 2502, a memory 2503, one or more applications (not shown), and one or more computer programs 2504. The foregoing components may be connected by using one or more communication buses 2505. Certainly, the electronic device may further include another component such as a communication module.

The one or more computer programs 2504 are stored in the memory 2503 and are configured to be executed by the one or more processors 2502. The one or more computer programs 2504 include instructions, and the instructions may be used to perform the steps in the foregoing embodiments. All related content of the steps in the foregoing method embodiments may be cited in function descriptions of corresponding physical components. Details are not described herein again.

For example, the processor 2502 may be specifically the processor 110 shown in FIG. 3, the memory 2503 may be specifically the internal memory 125 shown in FIG. 3, the display 2507 may be specifically the display 194 shown in FIG. 3, and the touch sensor 2506 may be specifically the touch sensor in the sensor module 180 shown in FIG. 3. This is not limited in this embodiment of this application.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory , a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for displaying a dock bar in a launcher, comprising:
displaying, by an electronic device, a first dock bar in a launcher, wherein the first dock bar comprises a first card of a first application service, and the first card comprises service content of the first application service; and
in response to an operation of selecting the first card in the first dock bar by a user, enabling, by the electronic device, the first application service, and displaying a display interface corresponding to the first application service.

2. The method according to claim 1, wherein the first dock bar further comprises an application icon of a second application.

3. The method according to claim 1, wherein the first dock bar comprises N cards that are in a one-to-one correspondence with N application services, the N application services comprise the first application service, the N cards comprise the first card, and N is an integer greater than 0.

4. The method according to claim 3, wherein after the displaying, by an electronic device, a first dock bar in a launcher, the method further comprises:
receiving, by the electronic device, a switching operation entered by the user on the first dock bar; and
in response to the switching operation, switching, by the electronic device, the N cards in the first dock bar to M application icons, wherein M is an integer greater than 0.

5. The method according to claim 3, wherein after the displaying, by an electronic device, a first dock bar in a launcher, the method further comprises:
receiving, by the electronic device, an expanding operation entered by the user on the first dock bar; and
in response to the expanding operation, switching, by the electronic device, the first dock bar to a second dock bar, wherein the second dock bar is an expanded form of the first dock bar, the second dock bar comprises a second card of the first application service, and content of the second card and content of the first card have an intersection.

6. The method according to claim 5, wherein
the first card is a card of a sub-service in the first application service, and the second card is an expanded card comprising a plurality of sub-services in the first application service; or
the content of the first card is a subset of the content of the second card.

7. The method according to claim 5, wherein the second dock bar further comprises N-1 expanded cards that are in a one-to-one correspondence with N-1 application services that exclude the first application service and that are in the N application services.

8. The method according to claim 5, wherein the second dock bar further comprises M application icons.

9. The method according to any one of claims 3 to 8, wherein after the displaying, by an electronic device, a first dock bar in a launcher, the method further comprises:
receiving, by the electronic device, a preset operation entered by the user on the first card in the first dock bar; and
in response to the preset operation, displaying, by the electronic device, a preset first setting interface, wherein the first setting interface is used to prompt the user to select a card that represents the first application service, for display in the first dock bar.

10. The method according to any one of claims 5 to 8, wherein after the switching, by the electronic device, the first dock bar to a second dock bar, the method further comprises:
receiving, by the electronic device, a preset operation entered by the user on the second card in the second dock bar; and
in response to the preset operation, displaying, by the electronic device, a preset first setting interface, wherein the first setting interface is used to prompt the user to select a card that represents the first application service, for display in the first dock bar.

11. The method according to claim 9 or 10, wherein the first setting interface comprises cards of the sub-services in the first application service, and after the displaying, by the electronic device, a preset first setting interface, the method further comprises:
in response to an operation of selecting a third card in the first setting interface by the user, displaying, by the electronic device, the third card in the first dock bar, and skipping displaying the first card in the first dock bar.

12. The method according to claim 9 or 10, wherein the first setting interface comprises cards of the sub-services in the first application service, and after the displaying, by the electronic device, a preset first setting interface, the method further comprises:
in response to an operation of selecting a third card and the first card in the first setting interface by the user, selecting, by the electronic device, one of the third card and the first card for display in the first dock bar.

13. The method according to any one of claims 3 to 12, wherein a fourth card of a second application service is displayed in an area other than the first dock bar in the launcher; and
after the displaying, by an electronic device, a first dock bar in a launcher, the method further comprises:
receiving, by the electronic device, a dragging operation of moving the fourth card to the first dock bar by the user;
in response to the dragging operation, adding, by the electronic device, a first placeholder box to the first dock bar; and
after detecting that the fourth card is released by the user, adding, by the electronic device, a card of the second application service to the first placeholder box, wherein the card of the second application service is the same as or different from the fourth card.

14. The method according to any one of claims 5 to 12, wherein a fourth card of a second application service is displayed in an area other than the first dock bar in the launcher; and
after the displaying, by an electronic device, a first dock bar in a launcher, the method further comprises:
receiving, by the electronic device, a dragging operation of moving the fourth card to the first dock bar by the user;
in response to the dragging operation, switching, by the electronic device, the first dock bar to the second dock bar, and adding a second placeholder box to the second dock bar; and
after detecting that the fourth card is released by the user, adding, by the electronic device, a card of the second application service to the second placeholder box, wherein the card of the second application service is the same as or different from the fourth card.

15. The method according to claim 13 or 14, wherein after the adding, by the electronic device, a card of the second application service to the first placeholder box, or after the adding, by the electronic device, a card of the second application service to the second placeholder box, the method further comprises:
displaying, by the electronic device, a preset second setting interface, wherein the second setting interface is used to prompt the user to select a card that represents the second application service, for display in the first dock bar.

16. The method according to any one of claims 3 to 15, wherein after the displaying, by an electronic device, a first dock bar in a launcher, the method further comprises:
receiving, by the electronic device, a dragging operation of moving the first card in the first dock bar to the launcher by the user; and
in response to the dragging operation, adding, by the electronic device, a card of the first application service to the launcher, wherein the card of the first application service is the same as or different from the first card.

17. The method according to any one of claims 5 to 15, wherein after the switching, by the electronic device, the first dock bar to a second dock bar, the method further comprises:
receiving, by the electronic device, a dragging operation of moving the second card in the second dock bar to the launcher by the user; and
in response to the dragging operation, adding, by the electronic device, a card of the first application service to the launcher, wherein the card of the first application service is the same as or different from the second card.

18. The method according to any one of claims 5 to 17, wherein after the displaying, by an electronic device, a first dock bar in a launcher, the method further comprises:
displaying, by the electronic device, a recommended card in the first dock bar, wherein an add button is set on the recommended card; and
if it is detected that the user selects the add button, adding, by the electronic device, the recommended card to the first dock bar.

19. The method according to claim 18, wherein after the displaying, by the electronic device, a recommended card in the first dock bar, the method further comprises:
in response to the expanding operation entered by the user on the first dock bar, switching, by the electronic device, the first dock bar to the second dock bar, wherein the second dock bar comprises an expanded card of the recommended card, and an add button is set on the expanded card; and
if it is detected that the user selects the add button, adding, by the electronic device, the recommended card to the first dock bar, and adding the expanded card to the second dock bar.

20. The method according to any one of claims 5 to 19, wherein before the displaying, by an electronic device, a first dock bar in a launcher, the method further comprises:
when displaying the first dock bar for the first time, displaying, by the electronic device, K recommended cards in the first dock bar, wherein an add button is set on each of the K recommended cards, and K is an integer greater than 1; and
if it is detected that the user selects an add button of a first recommended card, adding, by the electronic device, the first recommended card to the first dock bar, wherein the first recommended card is one of the K recommended cards.

21. The method according to claim 20, wherein after the displaying, by the electronic device, K recommended cards in the first dock bar, the method further comprises:
in response to the expanding operation entered by the user on the first dock bar, switching, by the electronic device, the first dock bar to the second dock bar, wherein the second dock bar comprises K expanded cards that are in a one-to-one correspondence with the K recommended cards, and an add button is set on each of the expanded cards; and
if it is detected that the user selects an add button of a first expanded card, adding, by the electronic device, the first recommended card corresponding to the first expanded card to the first dock bar, and adding the first expanded card to the second dock bar.

22. The method according to any one of claims 5 to 21, wherein a size of the first card in the first dock bar is 1×2, a size of an application icon in the first dock bar is 1×1, and a size of the second card in the second dock bar is greater than the size of the first card.

23. An electronic device, comprising:
a touchscreen, wherein the touchscreen comprises a touch sensor and a display;
one or more processors; and
a memory, wherein
the memory stores one or more computer programs, the one or more computer programs comprise instructions, and when the instructions are executed by the electronic device, the electronic device is enabled to perform the method for displaying a dock bar in a launcher according to any one of claims 1 to 22.

24. A computer-readable storage medium, wherein the computer-readable storage medium stores instructions, and when the instructions are run on an electronic device, the electronic device is enabled to perform the method for displaying a dock bar in a launcher according to any one of claims 1 to 22.

25. A computer program product, wherein when the computer program product runs on an electronic device, the electronic device is enabled to perform the method for displaying a dock bar in a launcher according to any one of claims 1 to 22.
